(19) Europäisches Patentamt
European Patent Office
Office européen des brevets

(11) **EP 3 359 305 B1**

(12) **EUROPÄISCHE PATENTSCHRIFT**

(45) Veröffentlichungstag und Bekanntmachung des Hinweises auf die Patenterteilung:
**02.12.2020   Patentblatt 2020/49**

(21) Anmeldenummer: **16779054.2**

(22) Anmeldetag: **06.10.2016**

(51) Int Cl.:
**B05C 5/02** (2006.01)     **G01F 13/00** (2006.01)
**G01N 15/14** (2006.01)

(86) Internationale Anmeldenummer:
**PCT/EP2016/073851**

(87) Internationale Veröffentlichungsnummer:
**WO 2017/060336 (13.04.2017 Gazette 2017/15)**

(54) **TROPFENDETEKTIONSEINRICHTUNG**

DROP DETECTION DEVICE

DISPOSITIF DE DÉTECTION DE GOUTTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.10.2015   DE 102015117248**

(43) Veröffentlichungstag der Anmeldung:
**15.08.2018   Patentblatt 2018/33**

(73) Patentinhaber: **Vermes Microdispensing GmbH**
**83624 Otterfing (DE)**

(72) Erfinder:
• **KARGER, Jiri**
**80807 München (DE)**

• **MEHRLE, Klaus Werner**
**83624 Otterfing (DE)**

(74) Vertreter: **Beckord & Niedlich Patentanwälte PartG mbB**
**Marktplatz 17**
**83607 Holzkirchen (DE)**

(56) Entgegenhaltungen:
**WO-A1-99/21031          WO-A1-2013/059835**
**DE-A1-102006 014 858    US-A- 5 267 978**
**US-A- 5 275 787**

**EP 3 359 305 B1**

**Beschreibung**

Die Erfindung betrifft eine Tropfendetektionseinrichtung. Zudem betrifft die Erfindung ein Verfahren zum Detektieren eines Tropfens eines Dosierventils, vorzugsweise eines Mikrodosierventils.

Bei dem Aufbringen und Dosieren von dünnflüssigen oder pastösen Medien, beispielsweise bei dem Aufbringen von Klebstoffen, kommen Dosierventile zum Einsatz. Ein Dosierventil umfasst an der Stelle des Austritts des zu dosierenden Mediums eine Düse. Bei herkömmlichen Nadelventilen wird zum Dosieren einer definierten Medienmenge die Öffnung des Dosierventils freigegeben, indem die Dosiernadel aus dem Ventilsitz etwas herausgezogen wird. Dabei kann das Medium, beispielsweise unter Vordruck getrieben, die Düsenöffnung bzw. Ventilöffnung durchströmen. Wenn der Befüllvorgang oder der Dosiervorgang abgeschlossen werden soll, wird die Düse des Dosierventils geschlossen.

Insbesondere basierend auf der Piezodosierventiltechnik lassen sich auch sogenannte "Jet-Ventile" aufbauen. Hierbei erfolgt die Abgabe von Medienmengen durch die Hin- und Herbewegung der Dosiernadel bzw. eines Ventilstößels, wobei eine Medienmenge bei einer Bewegung der Dosiernadel bzw. des Ventilstößels in Richtung der Düsenöffnung aus dieser strahlartig herausgestoßen wird. Dies erlaubt ein Aufbringen von definierten Mengen des Dosiermediums auch über größere Distanzen zwischen Dosierventil und Auftragsfläche, z. B. auf einem zu bearbeitenden Bauteil. Die Dosierabstände können dabei je nach Einsatzgebiet zwischen einem halben Millimeter und wenigen Millimetern variieren. Jet-Ventile ermöglichen eine sehr feine Dosierung mit hoher Geschwindigkeit bei vollständiger Kontaktlosigkeit zu dem zu bearbeitenden Bauteil. Um die Abgabe einzelner Tropfen kontrollieren zu können, sind Sensoren zur Detektion der Tropfen und entsprechende Auswertungsprozesse nötig.

Bei der optischen Detektion von Tropfen, welche insbesondere zuvor durch ein Jet-Ventil erzeugt wurden, treten folgende Schwierigkeiten auf:
Zunächst einmal soll zwischen dem Dosierventil und einer mit dem Tropfen beaufschlagten Oberfläche eines zu bearbeitenden Bauelements ein möglichst geringer Abstand eingehalten werden. Dieser Abstand kann je nach Anwendungsfall zwischen 0,5 mm und 3 mm variieren. Durch diese Vorgabe wird die mögliche Bauhöhe eines Tropfensensors stark eingeschränkt. Weiterhin sind die zu detektierenden Tropfen mit Durchmessern von manchmal weniger als 10 µm sehr klein. Ferner ist die Geschwindigkeit der Tropfen mit bis zu 50 m/s sehr hoch, wodurch sich eine extrem kurze Durchflugzeit durch einen von einem detektierenden Sensor überwachten Bereich von einigen Mikrosekunden ergibt. Die geringe Größe und hohe Geschwindigkeit des Tropfens bedingen ein schwaches Sensorsignal mit geringen Signalamplituden und einem ungünstigen Signal-RauschVerhältnis, was eine störungssichere optische Detektion eines Tropfens sehr erschwert. Versucht man einen optoelektronischen Sensor, wie zum Beispiel einen Fotodetektor, nahe an der Düse des Ventils anzubringen, um ein möglichst starkes optisches und damit nach der Wandlung elektrisches Signal zu erhalten, so kommt man mit den geringen Abmessungen des Systems in Konflikt. Beispielsweise ist es aufgrund des geringen Platzangebots kaum möglich, die gesamte Auswerteelektronik direkt am Sensor zu positionieren. Wird die Auswerteelektronik jedoch entfernt von der Sensorik angeordnet, so besteht das Problem, dass das erfasste elektrische analoge Signal zu der Auswerteelektronik störungssicher übertragen werden muss.

In GB 1 520 606 wird eine Infusionseinrichtung mit einer Fluidpassage und einer um die Fluidpassage herum angeordneten Tropfendetektionseinheit zur Überwachung einer abgegebenen Dosis einer Infusion beschrieben. Die Tropfendetektionseinheit umfasst eine Lichtemissionseinheit und eine Lichtdetektionseinheit. Das von der Lichtemissionseinheit emittierte Licht kreuzt die Trajektorie der abgegebenen Tropfen. Erfolgt durch einen Tropfen eine kurzzeitige Abschattung des von der Lichtemissionseinheit emittierten Lichts, so wird diese Abschattung von der Lichtdetektionseinheit erfasst und als emittierter Tropfen registriert. Allerdings kann die Überwachung durch Streulicht bzw. äußere Lichtquellen gestört werden, so dass eine zuverlässige Detektion nicht immer gegeben ist.

In US 5 267 978 wird ein Tropfendetektor nach dem Oberbegriff des Anspruchs 1 beschrieben, welcher mit Hilfe von infrarotem Licht fallende Tropfen eines intravenösen Systems detektiert.

In WO 99/ 21 031 wird eine optische Messeinrichtung zur Tropfendetektion beschrieben, welche gepulstes Licht verwendet.

In US 5 275 787 wird eine Teilchenseparierungseinrichtung beschrieben. Ein Partikel wird in einem Tropfen mit Hilfe von Fluoreszenz-Licht detektiert. Die Detektion wird mit dem Ausgabezeitpunkt eines Tropfens synchronisiert.

In WO 2013/ 059 835 A1 wird ein Durchflusszytometer beschrieben. Unterschiedlich moduliertes Licht wird dazu genutzt, Licht, welches von Partikeln aus unterschiedlichen Beobachtungszonen emittiert wird, zu unterscheiden.

In DE 10 2006 014 858 A1 wird ein Quadaraturerfassungsverfahren zur Erfassung von Langwellenstandardfunkwellen beschrieben.

Es ist daher eine Aufgabe der vorliegenden Erfindung, eine an die beengten Platzverhältnisse angepasste Tropfendetektionseinrichtung zu entwickeln, welche hochsensitiv und störungssicher arbeitet.

Diese Aufgabe wird durch eine Tropfendetektionseinrichtung nach Anspruch 1 und ein Verfahren zum Detektieren eines Tropfens eines Dosierventils gemäß Patentanspruch 15 gelöst.

Eine erfindungsgemäße Tropfendetektionseinrichtung zur Detektion von aus einer Düse eines Dosierventils austretenden Tropfen weist eine Signalerzeugungseinheit auf, welche dazu eingerichtet ist, ein Trägersignal mit einer definierten Pulsfrequenz zu erzeugen. Als Trägersignal soll ein gepulstes Signal verstanden werden, welches sich mit konstanten charakteristischen Parametern (z. B. Frequenz, also der Pulsfrequenz oder auch Trägerfrequenz genannt, Amplitude) periodisch ändert, beispielsweise in einem bestimmten Rhythmus an- und abgeschaltet wird. Das Signal trägt zunächst im unmodulierten Zustand außer den konstanten charakteristischen Parametern keine Information mit sich. Die zu übertragende Information erhält es erst durch die Modulation, welche durch irgendeine Art von physikalischer Wechselwirkung des Trägersignals mit einer Informationsquelle realisiert sein kann. Beispielsweise kann ein Trägersignal mit Hilfe eines Modulationssignals moduliert werden oder durch eine sonstige physikalische Störung beeinflusst werden, z. B. einen zu detektierenden Tropfen. Als Modulation soll in diesem Zusammenhang eine Änderung des Trägersignals bezüglich einer oder mehrerer seiner Parameter, wie zum Beispiel der Amplitude, der Frequenz oder der Phase, verstanden werden. Die Pulsfrequenz bzw. Trägerfrequenz sollte höher als die Frequenz der Modulation sein bzw. die Wellenlänge sollte kürzer sein als eine durch einen Tropfen verursachte "Störung" des Signals.

Zudem umfasst die erfindungsgemäße Tropfendetektionseinrichtung eine Modulationseinheit, welche dazu eingerichtet ist, ein durch eine physikalische Wechselwirkung des Trägersignals mit einem zu detektierenden Tropfen moduliertes Messsignal zu erzeugen. Teil der erfindungsgemäßen Tropfendetektionseinrichtung ist auch eine Demodulationseinheit, die dazu eingerichtet ist, eine Quadraturdemodulation des Messsignals durchzuführen, um eine In-Phase-Komponente und eine Quadratur-Komponente des demodulierten Messsignals zu ermitteln. Überdies weist die erfindungsgemäße Tropfendetektionseinrichtung eine Auswertungseinheit auf, welche dazu eingerichtet ist, auf Basis des modulierten Messsignals unter Berücksichtigung der definierten Pulsfrequenz zu ermitteln, ob ein Tropfen von dem Dosierventil abgegeben wurde. Vorzugsweise kann hierzu in einer Demodulationseinheit, welche zum Beispiel Teil der Auswertungseinheit sein kann, unter Berücksichtigung der definierten Pulsfrequenz ein Modulationssignal auf Basis des modulierten Signals ermittelt werden, und auf Basis des Modulationssignals wird dann ermittelt, ob ein Tropfen von dem Dosierventil abgegeben wurde. Als Modulationssignal soll in diesem Zusammenhang ein der Modulation des Trägersignals durch den Tropfen entsprechendes Signal verstanden werden, das durch Demodulation von dem Trägersignal wieder "getrennt" werden kann. Das Trägersignal wird von der Signalerzeugungseinheit vorzugsweise mit einer definierten Pulsfrequenz und einem für die Modulationseinheit optimalen Tastverhältnis erzeugt. Auf das Trägersignal abgestimmt bzw. davon abgeleitet können von der Signalerzeugungseinheit vorzugsweise weitere Steuersignale, wie zum Beispiel Steuersignale eines Mischers der Demodulationseinheit mit einer optimalen Phasenlage zur Seitenbandselektion, erzeugt werden.

Bestimmte Signalparameterwerte des modulierten Messsignals bzw. des Modulationssignals, wie zum Beispiel der Verlauf der Kurve der zeitlichen Abhängigkeit von Amplitude und Phase des Modulationssignals, entsprechen bestimmten Eigenschaften bzw. Abmessungen eines zu detektierenden Tropfens. Die Beziehung zwischen den genannten Signalparametern und den Eigenschaften bzw. Abmessungen eines zu detektierenden Tropfens müssen für die Detektion nicht unmittelbar bekannt sein. Es reicht aus, wenn vorab, beispielsweise in einem Trainingsverfahren mit Hilfe von "Muster-Tropfen" mit definierten Abmessungen, festgelegt wurde, welche Signalparameterwerte des modulierten Messsignals bzw. des Modulationssignals auf einen Tropfen mit den gewünschten Eigenschaften bzw. Abmessungen (der im Trainingsverfahren genutzten "Muster-Tropfen") hinweisen, d. h. wann ein Tropfen als detektiert gilt. Relevante Einstellparameter können zum Beispiel durch die automatisierte Beobachtung von in einem Trainingsprozess detektierten Soll-Tropfen gefunden werden.

Bei einem erfindungsgemäßen Verfahren zum Detektieren eines Tropfens eines Dosierventils, für welche die erfindungsgemäße Tropfendetektionseinrichtung bereitgestellt wird, wird ein vorzugsweise gepulstes Trägersignal mit einer definierten Pulsfrequenz erzeugt. Durch Beaufschlagen einer Trajektorie, auf der sich ein möglicher Tropfen bewegt, welcher von dem Dosierventil abgegeben wird, wird dafür gesorgt, dass durch eine physikalische Wechselwirkung des Trägersignals mit einem zu detektierenden Tropfen, der von dem Dosierventil abgegeben wurde, ein moduliertes Messsignal erzeugt wird. Dieses Messsignal entspricht, wenn kein Tropfen abgegeben wird, im Wesentlichen dem unveränderten Trägersignal und ansonsten dem durch die "Störung" des Tropfens modifizierten Trägersignal. Es wird eine Quadraturdemodulation des Messsignals durchgeführt, um eine In-Phase-Komponente und eine Quadratur-Komponente des demodulierten Messsignals zu ermitteln. Das Messsignal wird analysiert, und auf Basis des modulierten Messsignals wird unter Berücksichtigung der definierten Pulsfrequenz, vorzugsweise indem zunächst auf Basis des modulierten Messsignals ein Modulationssignal für die weitere Auswertung erzeugt wird, ermittelt, ob ein Tropfen von dem Dosierventil abgegeben wurde.

Weitere besonders vorteilhafte Ausgestaltungen und Weiterbildungen der Erfindung ergeben sich aus den abhängigen Ansprüchen sowie der nachfolgenden Beschreibung, wobei die Patentansprüche einer bestimmten Kategorie auch gemäß den abhängigen Ansprüchen einer anderen Kategorie weitergebildet sein können und Merkmale verschiedener Ausführungsbeispiele zu neuen Ausführungsbeispielen kombiniert werden können.

In einer Ausgestaltung der Tropfendetektionseinrichtung wird eine Abgabe eines Tropfens in einem definierten Zeitfenster überprüft, welches mit einer Tropfenabgabesteuerung des Dosierventils synchronisiert ist. Anders ausgedrückt, wird ein Zeitfenster, in dem ein Tropfen detektiert bzw. nach einem Tropfen überhaupt "gesucht" wird oder gegebenenfalls überhaupt ein Trägersignal abgegeben wird, mit einer Tropfenabgabe des Dosierventils so synchronisiert, dass die vorgesehene Tropfenabgabe innerhalb des Zeitfensters liegt.

In einer speziellen Ausgestaltung umfasst die Tropfendetektionseinrichtung eine Demodulationseinheit, die dazu eingerichtet ist, eine Amplitudendemodulation des Messsignals durchzuführen.

Vorzugsweise können auf Basis der In-Phase-Komponente und der Quadratur-Komponente der Betrag der Amplitude und/oder die Phase eines auf dem modulierten Messsignal basierenden Modulationssignals ermittelt werden. Beispielsweise lassen sich Amplitude und Phase des Modulationssignals durch Polarkoordinatentransformation der In-Phase-Komponente und der Quadratur-Komponente gewinnen. Hierzu kann die Auswertungseinheit der Tropfendetektionseinrichtung bevorzugt eine Modulationswertermittlungseinheit aufweisen, welche dazu eingerichtet ist.

In einer speziellen Variante der Tropfendetektionseinrichtung ist diese, insbesondere die Modulationswertermittlungseinheit, dazu eingerichtet, Amplituden-Ableitungswerte, umfassend die zeitliche Ableitung des Betrags der Amplitude, und/oder Phasen-Ableitungswerte, umfassend die zeitliche Ableitung der Phase des Modulationssignals, zu ermitteln.

In einer bevorzugten Ausgestaltung ist die Tropfendetektionseinrichtung, insbesondere die Modulationswertermittlungseinheit, dazu eingerichtet, in einem vorbestimmten festen Zeit-Intervall des Zeitfensters eine vorbestimmte Anzahl der Amplituden-Ableitungswerte zu Amplituden-Vergleichswerten und/oder in einem vorbestimmten zweiten Zeit-Intervall des Zeitfensters eine vorbestimmte Anzahl der Phasen-Ableitungswerte zu Phasen-Vergleichswerten zu kombinieren. Beispielsweise kann die Kombination der Amplituden-Ableitungswerte und der Phasen-Ableitungswerte eine Summation bzw. Addition mehrerer Amplituden-Ableitungswerte zu Amplituden-Vergleichswerten und eine Summation bzw. Addition mehrerer Phasen-Ableitungswerte zu Phasen-Vergleichswerten umfassen. Prinzipiell werden die beiden Zeit-Intervalle für die Kombination der Amplituden-Ableitungswerte und die Kombination der Phasen-Ableitungswerte während der Trainingsphase bzw. bei dem oben genannten Trainingsverfahren festgelegt. Dabei werden während des Trainings der Zeit-Intervalle ständig Werte ohne zeitliche Beschränkung gewonnen. Die Zeit-Intervalle werden so festgelegt, dass eine definierte Anzahl von Maximalwerten für die Amplituden-Ableitungswerte und die Phasen-Ableitungswerte in diesen Zeit-Intervallen gewonnen werden können. Die Zeit-Intervalle für die Amplituden-Ableitungswerte und die Phasen-Ableitungswerte werden vorzugsweise unabhängig voneinander festgelegt. D. h., deren Zeitdauer und deren Startzeitpunkt sind unabhängig voneinander.

Beispielsweise kann ein Zeit-Intervall so liegen, dass es 50 Messwerte umfasst, sollte die definierte Anzahl von Maximalwerten, zum Beispiel 10, in einem solch großen Bereich liegen. Nach Festlegung auf diesen Bereich, also nach der Trainingsphase, werden dann immer die 10 Maxima aus diesem 50 Messwerte umfassenden Zeit-Intervall ermittelt bzw. gesucht und weiterverwendet.

Auf Basis der Amplituden-Vergleichswerte und/oder der Phasen-Vergleichswerte kann dann bevorzugt ermittelt werden, ob das Modulationssignal einen Tropfen indiziert. Zusätzlich zu der Modulationswertermittlungseinheit umfasst daher die Auswertungseinrichtung der erfindungsgemäßen Tropfendetektionseinrichtung bevorzugt eine Detektionsfiltereinheit, welche dazu eingerichtet ist, auf Basis der Amplituden-Vergleichswerte und/oder der Phasen-Vergleichswerte zu ermitteln, ob das Modulationssignal einen Tropfen indiziert.

Zur Detektion eines Tropfens kann insbesondere die Detektionsfiltereinheit der Tropfendetektionseinrichtung dazu eingerichtet sein, eine Abweichung eines, z. B. von der Modulationswertermittlungseinheit, ermittelten Amplituden-Vergleichswerts von einem Amplituden-Referenzwert zu ermitteln und/oder eine Abweichung eines, z. B. von der Modulationswertermittlungseinheit, ermittelten Phasen-Vergleichswerts von einem Phasen-Referenzwert zu ermitteln. Ein Amplituden-Referenzwert kann zum Beispiel aus einer Mehrzahl von Amplituden-Vergleichswerten von vorher erfassten Modulationssignalen gebildet sein. Ein Phasen-Referenzwert kann zum Beispiel aus einer Mehrzahl von Phasen-Vergleichswerten von vorher erfassten Modulationssignalen gebildet sein. Bei der Bildung der Referenzwerte sollte darauf geachtet werden, dass nur Vergleichswerte, welche als korrekt detektierten Tropfen zugeordnet sind, in die Ermittlung der Referenzwerte eingehen.

In einer speziellen Ausgestaltung kann die Tropfendetektionseinrichtung eine Referenzwert-Speichereinrichtung aufweisen, in der ein Amplituden-Referenzwert, welcher aus einer Mehrzahl von Amplituden-Vergleichswerten von vorher erfassten Modulationssignalen gebildet ist und/oder ein Phasen-Referenzwert, welcher aus einer Mehrzahl von Phasen-Vergleichswerten von vorher erfassten Modulationssignalen gebildet ist, als variable Referenzwerte gespeichert sind. Hieraus resultiert eine ständige Anpassung des Referenzwertes bei einer - in Bezug auf die Vergleichswerte eines Einzeltropfens - langsamen globalen durchschnittlichen Schwankung der Vergleichswerte. Gegenüber dem Vergleich der Vergleichswerte mit einer absoluten Größe können hierdurch die erlaubten Schwankungsbreiten in Bezug auf die Referenzwerte verkleinert werden.

Zur Ermittlung, ob ein Tropfen detektiert wurde, kann die Tropfendetektionseinrichtung, insbesondere die Detektionsfiltereinheit, dazu eingerichtet sein, zu ermitteln, ob die ermittelte Abweichung des Amplituden-Vergleichswerts vom Amplituden-Referenzwert und/oder die ermittelte Abweichung des Phasen-Vergleichswerts vom Phasen-Referenzwert einen Maximalwert nicht überschreiten. Die Referenzwerte werden während des normalen Detektionsvorgangs laufend neu gewonnen. Sie stellen in Verbindung mit den aus einer Filtertrainingsphase ermittelten erlaubten relativen Abweichungen eine Art Sollwert dar. Die erlaubten relativen Abweichungsbreiten stellen empirische Größen dar, da sie bei dem Filtertraining ermittelt werden. Liegen die ermittelten Vergleichswerte zu weit weg von dem Sollwert, so wird daraus geschlossen, dass entweder kein Tropfen oder zumindest kein regulärer Tropfen detektiert wurde.

In einer besonders bevorzugten Variante wird ermittelt, ob der für die Ermittlung der Abweichung des Amplituden-Vergleichswerts verwendete Amplituden-Referenzwert in einem vorbestimmten Amplituden-Referenzwertintervall liegt und/oder ob der für die Ermittlung der Abweichung des Phasen-Vergleichswerts verwendete Phasen-Referenzwert in einem vorbestimmten Phasen-Referenzwertintervall liegt. Hierzu kann wiederum die Detektionsfiltereinheit entsprechend eingerichtet sein. Beispielsweise kann in einer Referenzwert-Speichereinrichtung jeweils ein festes Referenzwertintervall für die Amplituden- und Phasenreferenzwerte gespeichert sein. Ein solches festes Referenzwertintervall kann beispielsweise in einer Trainingsphase ermittelt werden, in der auch eine mögliche Schwankungsbreite eines Referenzwerts gemessen wird. Liegt der verwendete Referenzwert nicht in dem festen Referenzwertintervall, so wird davon ausgegangen, dass zur Festlegung des Referenzwertes überwiegend nicht reguläre Tropfen beigetragen haben, so dass ein solcher Referenzwert als nicht mehr sicher zu betrachten ist. Beispielsweise kann in einem solchen Fall ein Ermittlungsergebnis als zumindest unsicher eingestuft oder gar verworfen werden. Eine solche Situation kann auftreten, wenn sich die Ausmaße der von einem Dosierventil dosierten Tropfen nur langsam, aber stetig ändern. Wird nun ein Referenzwert auf Basis solcher geänderter Modulationswerte bzw. Vergleichswerte gebildet, so kann im ungünstigen Fall ein Referenzwert auch einem nicht korrekten Tropfen entsprechen, der von einem vorab ermittelten Soll-Tropfen zu stark abweicht. Um einen solchen Fehler zu vermeiden, wird bevorzugt ein festes Intervall für die Referenzwerte festgelegt, von dem diese nicht abweichen dürfen. Wird ermittelt, dass die Referenzwerte nicht mehr in dem vorbestimmten Intervall liegen, so kann zum Beispiel eine Meldung an den Benutzer der Tropfendetektionseinrichtung ausgegeben werden, dass das System nicht mehr korrekt kalibriert ist. Der Benutzer kann dann Gegenmaßnahmen ergreifen. Beispielsweise kann der Benutzer das Dosierventil auf korrekte Funktion überprüfen und eventuelle Funktionsstörungen beseitigen. Anschließend können zum Beispiel nach einem Neustart des Systems korrekte Referenzwerte ermittelt werden. Die Referenzwerte werden in diesem Fall nach dem Neustart in einer Art Vorlaufphase ermittelt und während des Messvorgangs durch Mittelwertbildung von aktuellen Messwerten mit bisherigen Referenzwerten ständig aktualisiert.

In einer besonders praktikablen Ausgestaltung der erfindungsgemäßen Tropfendetektionseinrichtung umfasst die Modulationseinheit eine Lichtemissionseinheit und eine Lichtsensoreinheit. Als Lichtemissionseinheit kann zum Beispiel eine Leuchtdiode, insbesondere eine Halbleiterdiode, verwendet werden, welche ein elektrisches Trägersignal in ein Lichtsignal wandelt. Die Lichtsensoreinheit kann zum Beispiel einen auf dem Fotoeffekt beruhenden Sensor, vorzugsweise einen Halbleitersensor, umfassen.

Zusätzlich kann die Modulationseinheit der erfindungsgemäßen Tropfendetektionseinrichtung mindestens zwei Lichtleiter umfassen. Diese Lichtleiter sind bevorzugt mit der Lichtemissionseinheit und der Lichtsensoreinheit derart verbunden und derart positioniert, dass von der Lichtemissionseinheit emittiertes Licht zu einer Trajektorie eines von einem Dosierventil emittierten Tropfens geleitet wird, die Trajektorie des Tropfens kreuzt und der Lichtsensoreinheit zugeführt wird. Anders ausgedrückt, führt einer der beiden Lichtleiter das von der Lichtemissionseinheit erzeugte Licht zu einem Bereich, durch den erwartungsgemäß ein von einem Dosierventil emittierter Tropfen hindurchfliegt. Der andere Lichtleiter wird bevorzugt dem ersten Lichtleiter gegenüberliegend positioniert, so dass er das von einem Tropfen eventuell modulierte Licht aufnimmt und der Lichtsensoreinheit zuführt. Bei der Verwendung zweier Lichtleiter als Lichttransporteinheiten kann vorteilhaft auf die Anordnung der Lichtemissionseinheit und der Lichtsensoreinheit direkt im Bereich der Trajektorie des Tropfens verzichtet werden. Somit muss bei der Dimensionierung der Lichtemissionseinheit und der Lichtsensoreinheit nicht auf die üblicherweise sehr eingeschränkten räumlichen Verhältnisse im Bereich der Düse des Dosierventils bzw. zwischen Dosierventil und Werkstück Rücksicht genommen werden.

Alternativ oder zusätzlich kann die erfindungsgemäße Tropfendetektionseinrichtung auch eine Modulationseinheit mit einer kapazitiven Sensoreinheit umfassen. In diesem Fall kann also das Prinzip der Tropfendetektion auf der Modulation der Kapazität eines Kondensators basieren, welche durch eine durch einen Tropfenflug bedingte Schwankung der relativen Permittivität hervorgerufen wurde. Die Analyse und Auswertung des modulierten Signals sowie die Erzeugung eines elektrischen Trägersignals können bei dieser Ausgestaltung analog zu den anderen Ausgestaltungen vorgenommen werden.

Besonders bevorzugt ist es, wenn die Signalerzeugungseinheit der erfindungsgemäßen Tropfendetektionseinrichtung dazu eingerichtet ist, als Trägersignal ein vorzugsweise gepulstes Rechtecksignal, d. h. ein möglichst rechteckförmiges Trägersignal, zu erzeugen.

Bevor mit der eigentlichen Tropfendetektion begonnen wird, wird bevorzugt zunächst eine Kalibration der erfindungsgemäßen Tropfendetektionseinrichtung vorgenommen. Dabei wird zum Beispiel eine Pulsweite des Trägersignals derart eingestellt, dass z. B. bei einer Variante, bei der mit einem Lichtsignal gearbeitet wird, eine optimale Helligkeit eines auf Basis des Trägersignals gebildeten Lichtstrahls erreicht wird. Die optimale Helligkeit bezieht sich auf das den optoelektronischen Sensor, vorzugsweise eine Photodiode, erreichende Restlicht, also das Licht, welches nach der gesamten optischen Strecke noch übrig bleibt und auf die Photodiode trifft. Die Intensität des emittierten Lichts - und damit auch des empfangenen Restlichts - muss so gewählt werden, dass der Sensor in diesem Betriebspunkt seine maximale Empfindlichkeit besitzt. Die Empfindlichkeit bezieht sich dabei darauf, dass aus einer leichten Schwankung der Lichtintensität eine maximal mögliche Schwankung des Ausgangsstroms der Photodiode resultiert. Die Einstellung der optimalen Helligkeit muss bei einem Tausch der Lichtwellenleiter angepasst werden.

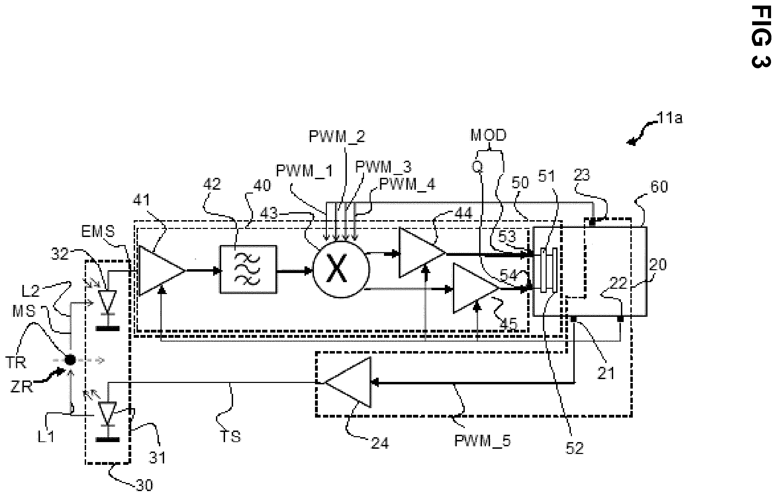

Die vorzunehmenden Einstellungen betreffen zum Beispiel das Festlegen einer Frequenz des gepulsten Trägersignals, so dass das empfangene Signal, d. h. das Trägersignal sowie die durch die durch den Tropfen verursachte Amplitudenmodulation entstandenen Seitenbänder, den Bandpassfilter optimal durchlaufen können. Durch die Einstellung der Phasenlagen zwischen dem Trägersignal und den Ansteuersignalen der Demodulationseinheit wird dann ein Seitenband des modulierten Messsignals selektiert. Alle hier genannten Einstellungen sind Hardware-Parameter, welche im Prinzip nur beim ersten Start der Tropfendetektion oder beim Tausch von Hardware-Komponenten geändert werden müssen, beispielsweise auch beim Wechsel auf eine andere Lichtwellenleiterlänge. Hinzu kommen noch die Parameter für die drei Verstärkerstufen (Fig.3, 41, 44, 54). Alle Hardware-Parameter können manuell eingegeben, aber auch automatisiert im Rahmen des Hardware-TeachIn (oder Hardware-Trainingsphase) gefunden/eingestellt werden.

Außerdem können in einer Trainingsphase Parameter der Detektionsfiltereinheit durch die automatisierte Beobachtung von "Soll-Tropfen" gefunden werden. Die einstellbaren Parameter umfassen zum Beispiel Erfassungs-Zeitfenster für Amplituden/Phasen-Vergleichswerte, einen relativen erlaubten Bereich der Vergleichswerte in Bezug auf die Referenzwerte und einen erlaubten Bereich der Referenzwerte. Diese Werte ändern sich, wenn sich der Dosierprozess der Tropfen ändert. Sämtliche Parameter der Detektionsfiltereinheit können auch manuell gesetzt werden.

Vorzugsweise erfolgt die Aktivierung des Trägersignals synchron mit dem Empfang eines Steuersignals zum Öffnen des Dosierventils, welches die Steuereinheit des Dosierventils (Ventilsteuerungseinheit) an die Tropfendetektion aussendet. Das Steuersignal ist dabei bevorzugt als Rechtecksignal ausgebildet, welches sowohl für das Öffnen des Dosierventils als auch für das Schließen des Dosierventils ausgegeben wird. Der eigentliche Tropfenausstoßvorgang erfolgt während des Schließens des Dosierventils. Die Aktivierung des Trägersignals erfolgt bereits mit der ersten steigenden Flanke des Steuersignals zum Öffnen des Dosierventils, da das Trägersignal einige Mikrosekunden zur Stabilisierung benötigt. Die Reaktion der Auswertungseinheit erfolgt erst auf die zweite steigende Flanke des Steuersignals, also erst, wenn die tatsächliche Tropfenausstoßung beginnt. Denn erst in diesem Moment besteht die Möglichkeit, dass ein Tropfen die Modulationseinheit passiert. Auf dies Weise kann das zeitliche Verhalten des eigentlichen Jetvorgangs extrem genau detektiert werden.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:

Figur 1 eine schematische Darstellung einer Tropfendetektionseinrichtung gemäß einem Ausführungsbeispiel der Erfindung,

Figur 2 ein Schaubild, welches den zeitlichen Verlauf einer Tropfendetektion veranschaulicht,

Figur 3 eine detailliertere schematische Darstellung einer Tropfendetektionseinrichtung gemäß einem Ausführungsbeispiel der Erfindung,

Figur 4 eine schematische Darstellung einer Modulationseinheit einer Tropfendetektionseinrichtung gemäß einem Ausführungsbeispiel der Erfindung,

Figur 5 eine detailliertere schematische Darstellung einer Mischereinheit einer Demodulationseinheit einer Tropfendetektionseinrichtung gemäß einem Ausführungsbeispiel der Erfindung,

Figur 6 eine schematische Darstellung einer Außenansicht einer Kontrolleinheit einer Tropfendetektionseinrichtung gemäß einem Ausführungsbeispiel der Erfindung,

Figur 7 ein Flussdiagramm, mit dem ein Verfahren gemäß einem Ausführungsbeispiel der Erfindung veranschaulicht wird,

Figur 8 ein Flussdiagramm, mit dem das Funktionsprinzip der in den Figuren 1 und 3 gezeigten Modulationswertermittlungseinheit im Detail veranschaulicht ist,

Figur 9 ein Flussdiagramm, mit dem das Funktionsprinzip der in den Figuren 1 und 3 gezeigten Detektionsfiltereinheit im Detail veranschaulicht ist,

Figur 10 eine detailliertere schematische Darstellung einer Tropfendetektionseinrichtung gemäß einem alternativen Ausführungsbeispiel der Erfindung.

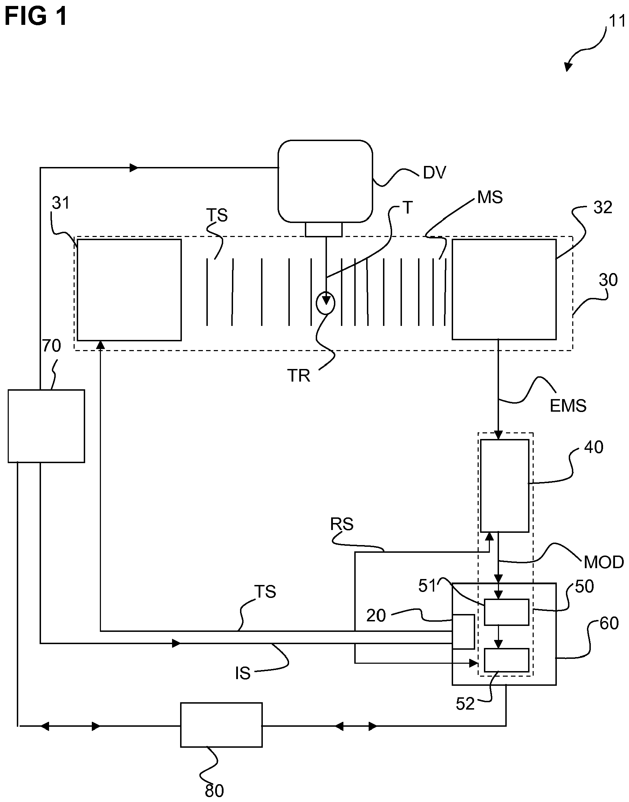

In Figur 1 ist eine Tropfendetektionseinrichtung 11 gemäß einem sehr vereinfachten, prinzipiellen Ausführungsbeispiel der Erfindung an einem Dosierventil DV schematisch gezeigt. Die Tropfendetektionseinrichtung 11 umfasst eine Signalerzeugungseinheit 20. Die Signalerzeugungseinheit 20 erzeugt ein Trägersignal TS mit einer definierten Pulsfrequenz bzw. Trägerfrequenz. Das Trägersignal TS wird an eine Modulationseinheit 30 übermittelt, welche dazu eingerichtet ist, das Trägersignal TS (in Abhängigkeit von einem zu detektierenden Tropfen) mit einem Modulationssignal zu beaufschlagen.

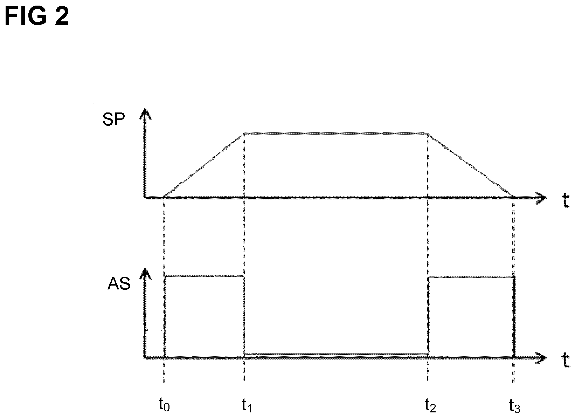

Die Modulationseinheit 30 umfasst einen Zwischenraum, in dem eine Trajektorie T eines Tropfens TR verläuft, der von dem Dosierventil DV emittiert wurde. Die Modulationseinheit 30 umfasst in dem in Figur 1 gezeigten Ausführungsbeispiel eine erste Signalwandlungseinheit 31, welche das erzeugte Trägersignal TS in eine Signalform wandelt, mit der eine Wechselwirkung des Trägersignals TS mit einem zu detektierenden Tropfen TR möglich ist. Der ersten Signalwandlungseinheit 31 gegenüberliegend ist eine zweite Signalwandlungseinheit 32 angeordnet, die ein eventuell von einem zu detektierenden Tropfen TR moduliertes Messsignal MS wieder in ein elektrisch übertragbares und elektronisch weiterverarbeitbares Signal EMS wandelt. Die Signalwandlungseinheiten 31, 32 können auch zusätzlich Signalzuführungseinheiten und Signalabführungseinheiten (siehe Figur 2) umfassen, die ein ungestörtes Zu- und Abführen eines mit einem Tropfen TR möglichweise wechselwirkenden Signals in dem Zwischenraum zwischen den beiden Signalwandlungseinheiten 31, 32 gewährleisten.

Das elektrische, modulierte Messsignal EMS wird von der Modulationseinheit 30 weiter an eine Auswertungseinheit 50 übermittelt. Die Auswertungseinheit 50 umfasst eine Demodulationseinheit 40, welche das elektrische modulierte Messsignal EMS demoduliert. D. h., es wird ein Modulationssignal MOD (welches die Information enthält, ob eine Wechselwirkung zwischen dem Trägersignal und einem Tropfen erfolgt ist) des elektrischen modulierten Messsignals EMS von dem Trägersignal TS getrennt und anschließend an eine Modulationswertermittlungseinheit 51 übermittelt, welche in dem in Figur 1 gezeigten ersten Ausführungsbeispiel Teil einer Steuereinrichtung 60 ist.

Die Modulationswertermittlungseinheit 51 ermittelt auf Basis des Modulationssignals MOD Vergleichswerte, wie zum Beispiel Amplituden-Vergleichswerte oder Phasen-Vergleichswerte. Die Vergleichswerte werden an eine Detektionsfiltereinheit 52 übermittelt, welche auf der Basis der genannten Vergleichswerte und vorab ermittelten Referenzwerte prüft, ob ein Tropfen TR mit der gewünschten Dimensionierung von dem Dosierventil DV abgegeben wurde oder nicht.

Weiterhin kann die Signalerzeugungseinheit 20 mit der Demodulationseinheit 40 elektrisch verbunden sein, um der Demodulationseinheit 40 ein Referenzsignal RS, zum Beispiel das erzeugte Trägersignal TS oder ein um eine bestimmte Phase verschobenes Trägersignal zu übermitteln. Die Signalerzeugungseinheit 20 und/oder die Auswertungseinheit 50 können zusätzlich mit einer Ventilsteuerungseinheit 70 des Dosierventils DV signaltechnisch verbunden sein. Beispielsweise übermittelt die Steuerungseinheit des Dosierventils DV ein Startsignal IS bzw. Triggersignal an die Signalerzeugungseinheit 20 und/oder an die Auswertungseinheit 50, mit dem die genannten Einheiten 20, 50 jedes Mal gestartet werden können, kurz bevor das Dosierventil DV einen Tropfen TR abgibt. Die Ventilsteuerungseinheit 70 legt mit dem Startsignal IS sowohl den Startzeitpunkt eines Auslesefensters als auch den Start der Generierung des Trägersignals TS fest. Für die Festlegung des Startzeitpunkts des Auslesefensters wird das Startsignal IS an die Auswertungseinheit 50 gesandt. Für den Start der Trägersignalgenerierung wird das Startsignal zusätzlich an die Signalerzeugungseinheit 20 übermittelt. Zusätzlich ist zwischen die Ventilsteuerungseinheit 70 und die Steuereinrichtung ein Prozessleitrechner 80 geschaltet, welcher von der Steuereinrichtung 60 Informationen über die aktuelle Tropfen-Dosierung erhält.

In Figur 2 ist der zeitliche Ablauf einer Tropfendetektion mit Hilfe eines Schaubilds veranschaulicht, in dessen oberen Teil die Stößelposition SP des Dosierventils DV in Abhängigkeit von der Zeit t dargestellt ist. In dem unteren Teil des Schaubilds der Figur 2 ist der zeitliche Verlauf eines Steuersignals AS zur Steuerung der Stößelposition aufgezeichnet. Zeitgleich mit der Aktivierung des Stößels des Dosierventils DV durch die Ventilsteuerungseinheit 70 zum Zeitpunkt to wird von der Ventilsteuerungseinheit 70 ein Startsignal IS an die Signalerzeugungseinheit 20 gesendet, welche darauf ein Trägersignal TS generiert. Die Aktivierung des Trägersignals TS erfolgt also bereits mit der ersten steigenden Flanke des Steuersignals des Dosierventils DV, da das Steuersignal einige Mikrosekunden zur Stabilisierung benötigt. Zugleich wird das Startsignal IS auch an die Auswertungseinheit 50 übermittelt, welche mit einer Verzögerung aktiviert wird und zu dem Zeitpunkt $t_2$ eine Tropfendetektion startet. Zu dem Zeitpunkt $t_1$ erreicht der Stößel des Dosierventils DV eine Position, bei der das Ventil vollständig geöffnet ist. Bei dem Zeitpunkt $t_1$ erfolgt mit Hilfe des Steuersignals des Dosierventils ein Stopp der Betätigung des Dosierventils. Bei dem Zeitpunkt $t_2$ wird ein Schließvorgang des Dosierventils DV gestartet. Zwischen den Zeitpunkten $t_2$ und $t_3$ wird ein Tropfen von dem Dosierventil DV emittiert und es erfolgt eine Detektion des Tropfens mit Hilfe der Auswertungseinheit 50. Bei dem Zeitpunkt $t_3$ ist das Dosierventil wieder vollständig geschlossen und das Triggersignal IS wird gestoppt, so dass auch das Trägersignal TS mit einer bestimmten Verzögerung abgebrochen wird. Die Reaktion der Auswertungseinheit erfolgt verzögert zu dem Zeitpunkt $t_2$, also erst, wenn der tatsächliche Tropenausstoßvorgang beginnt. Denn erst ab diesem Moment besteht die Möglichkeit, dass ein Tropfen die Modulationseinheit 30 passiert. Das ausgesendete Triggersignal IS der Ventil-Steuerungseinheit 70 dient der Signalerzeugungseinheit 20 als Start-Signal für die Erzeugung des Trägersignals TS. Der Detektionsfiltereinheit 52 dient

**EP 3 359 305 B1**

es als Zeitbasis für das Filterzeitfenster. Das Filterzeitfenster bezieht sich immer auf dieses Triggersignal.

In Figur 3 ist eine Tropfendetektionseinrichtung 11a gemäß einem besonders bevorzugten Ausführungsbeispiel der Erfindung im Detail gezeigt. Die Tropfendetektionseinrichtung 11a umfasst wie die in Figur 1 gezeigte Tropfendetektionseinrichtung 11 gemäß einem ersten Ausführungsbeispiel der Erfindung eine Signalerzeugungseinheit 20, welche in Figur 3 gestrichelt eingezeichnet ist. Die Signalerzeugungseinheit 20 umfasst in diesem Ausführungsbeispiel eine Sendesignalgenerierungseinheit 21, welche ein Sendesignal PWM_5 mit einer definierten, vorgebbaren Pulsfrequenz zum Beispiel als gepulstes Rechtecksignal erzeugt. Das erzeugte Sendesignal PWM_5 wird an einen Leistungsverstärker 24 übermittelt, welcher das Sendesignal PWM_5 zu einem Trägersignal TS verstärkt. Die Signalerzeugungseinheit 20 umfasst eine zweite Signalgenerierungseinheit 23, welche dazu eingerichtet ist, gegenüber dem Trägersignal phasenverschobene gepulste Steuersignale PWM_1,..., PWM_4 an eine Mischereinheit 43 einer Demodulationseinheit 40 zu übermitteln. Die Pulsfrequenz der Steuersignale PWM_1,..., PWM_4 für den Mischer 43 ist immer gleich der Frequenz des Sendesignals PWM_5. Die Phasenverschiebung zwischen den Steuersignalen PWM_1,..., PWM_4 und dem Sendesignal ist variabel. Die Pulsfrequenz beträgt vorzugsweise 450 kHz +- 15 kHz. Die Festlegung der Frequenz des Trägersignals dient dazu, dass das empfangene Signal (das Trägersignal und durch die durch den Tropfen bewirkte Amplitudenmodulation entstandene Seitenbänder) das Bandpassfilter optimal durchlaufen kann.

Durch die Einstellung der Phasenlage zwischen dem Trägersignal und den Ansteuersignalen der Demodulationseinheit wird dann ein Seitenband selektiert. Die Trägerfrequenz muss dem Abtasttheorem nach höher als die zweifache, sich aus der Tropfendurchflugzeit durch die Modulationseinheit 30 ergebende Frequenz sein.

Das Trägersignal TS wird von dem Verstärker 24 an eine Modulationseinheit 30 übermittelt. Die Modulationseinheit 30 umfasst wie die in Figur 1 gezeigte Modulationseinheit 30 erste und zweite Signalwandlungseinheiten 31, 32. In dem in Figur 3 gezeigten Ausführungsbeispiel umfasst die erste Signalwandlungseinheit 31 eine Lichtemissionseinheit. Die Lichtemissionseinheit kann zum Beispiel eine Leuchtdiode sein, welche in Abhängigkeit von dem an der Leuchtdiode anliegenden Trägersignal TS leuchtet. Anders ausgedrückt, wird das zunächst als gepulster elektrischer Strom vorliegende Trägersignal TS in ein gepulstes Lichtsignal gewandelt. Die erste Signalwandlungseinheit 31 ist hier mit einem ersten Lichtwellenleiter L1 verbunden, der das gepulste Lichtsignal einem Zwischenraum ZR zuführt, in dem eine Trajektorie eines zu detektierenden Tropfens TR eines Dosierventils verläuft. Dem ersten Lichtwellenleiter L1 gegenüberliegend ist ein zweiter Lichtwellenleiter L2 angeordnet, welcher mit einer zweiten Signalwandlungseinheit 32 verbunden ist und ein eventuell durch einen Tropfen TR moduliertes Lichtsignal MS an die zweite Signalwandlungseinheit 32 weiterleitet. Die zweite Signalwandlungseinheit 32 umfasst zum Beispiel einen Fotodetektor, welcher das modulierte Lichtsignal MS empfängt und wieder in ein von einer elektrischen Leitung transportierbares elektrisches moduliertes Signal EMS umwandelt.

Das elektrische modulierte Signal EMS wird anschließend von der Modulationseinheit 30 an eine Auswertungseinheit 50 übermittelt, welche auch eine Demodulationseinheit 40 aufweist. Die Demodulationseinheit 40 umfasst eine Verstärkereinheit 41, welche das modulierte Signal EMS verstärkt. Die Verstärkereinheit 41 wird über einen Steuerungssignalausgang 22 von der Signalerzeugungseinheit 20 angesteuert und dient einerseits zur Vorverstärkung des von dem Fotodetektor 32 erfassten modulierten Signals EMS und andererseits als Transimpedanzverstärker. Der Fotodetektor 32 wird dabei in Sperrrichtung vorgespannt, und in einem Quasikurzschluss betrieben. Hierdurch erfolgt vom Fotodetektor 32 nur noch die Abgabe eines von der Beleuchtungsstärke über viele Größenordnungen linear abhängigen Stroms ohne Spannungsschwankung. Hierdurch liegt die normalerweise durch die Sperrschichtkapazität limitierte Bandbreite des Detektors wesentlich höher, da keine Umladung der Kapazität erfolgt. Durch die Vorspannung wird zudem eine weitere Verkleinerung der Kapazität erreicht, womit eine weitere Steigerung der erzielbaren Bandbreite einhergeht. Durch den Transimpedanzverstärker erfolgt zudem eine Umsetzung des Stromsignals in ein Spannungssignal. Der Verstärkungsfaktor dieser Umsetzung ist justierbar. Hierdurch wird eine maximale, von der Tropfenabschattung abhängige, spannungsgeführte Signalmodulation erreicht.

Weiterhin umfasst die Demodulationseinheit 40 eine Filtereinheit 42. Die Filtereinheit 42 kann zum Beispiel einen Bandpassfilter umfassen, welcher nur die beiden Seitenbänder und die Trägerfrequenz des modulierten Signals EMS durchlässt. Die Filtereinheit 42 entfernt außerdem eventuelle - durch externe Lichteinstrahlung verursachte - Störsignale, beispielsweise mit von der Pulsfrequenz des Trägersignals TS weit entfernten Frequenzen. Zudem entfernt die Filtereinheit 42, bevorzugt ein steilflankiger Bandpassfilter, auch durch die Pulsweitenmodulation erzeugte Oberwellen. Das so gefilterte modulierte Messsignal EMS wird anschließend an einen Mischer 43 weitergeleitet, der das modulierte und gefilterte Messsignal EMS mit von der zweiten Signalgenerierungseinheit 23 erzeugten, gegenüber dem Trägersignal phasenverschobenen gepulsten Ansteuersignalen PWM_1,..., PWM_4 mischt und ein In-Phase-Signal bzw. eine In-Phase-Komponente I an einen In-Phase-Signalverstärker 44 übermittelt und ein Quadratur-Signal bzw. eine Quadraturkomponente Q an einen Quadratur-Signal-Verstärker 45 übermittelt. Die phasenrichtige Ansteuerung des Mischer 43 bewirkt die Demodulation nur eines Seitenbandes. Der In-Phase-Signalverstärker 44 und der Quadratur-Signal-Verstärker 45 werden von einem Steuerungssignalausgang 22 der Signalerzeugungseinheit 20 angesteuert. Die Verstärker 41, 44, 45 werden getrennt voneinander angesteuert. Sie werden jeweils über einen über einen Datenbus (zb. I2C-Bus) programmierbaren veränderlichen Widerstand (Rheostat), welcher die Rückkopplung beeinflusst, eingestellt.

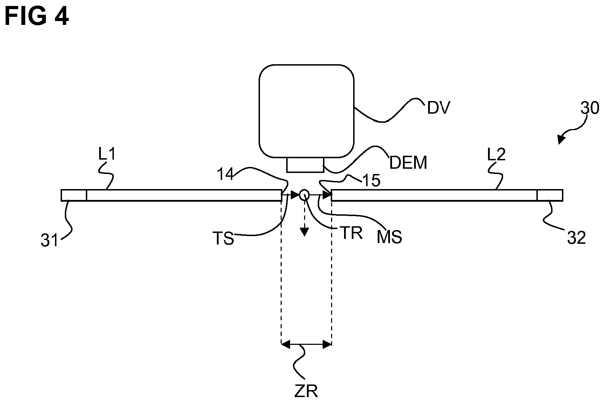

Jeder Rheostat (und damit Verstärker) wird hierbei einzeln verstellt. Die Einstellung des Verstärkers 41 ist dabei vom Wert her völlig unabhängig von den Verstärkern 44 und 45. Die Verstärker 44 und 45 weisen jedoch immer denselben Wert auf, um die Relation zwischen dem I- und dem Q-Signal nicht zu verändern. Dennoch werden auch diese beiden getrennt voneinander angesteuert. Die Funktionsweise der Mischereinheit 43 ist in Figur 4 im Detail gezeigt und wird später noch näher erläutert. Die In-Phase-Komponente I und die Quadraturkomponente Q bilden dabei das Modulationssignal MOD.

Nach der Verstärkung der beiden Signalkomponenten I, Q in den Verstärkern 44, 45 werden die beiden Komponenten I, Q innerhalb der Auswertungseinheit 50 an die Teileinheiten der Auswertungseinheit 50 übermittelt, welche in dem in Figur 2 gezeigten Ausführungsbeispiel Teil der Steuereinheit 60 sind. Die Steuereinheit 60 umfasst entsprechende Eingänge 53, 54 für die Signalkomponenten I, Q. Den Eingängen 53, 54 nachgeschaltet sind AD-Wandler (nicht gezeigt), welche die analogen Signalkomponenten I, Q in digitale Signale wandeln. Die Verstärker 44, 45 der Demodulationseinheit 40 sind in ihrem Verstärkungsfaktor anpassbar und dienen dazu, die von der Mischereinheit 43 erzeugten Signalkomponenten I, Q des Modulationssignals MOD auf ein für die AD-Wandler optimales Spannungsniveau anzuheben. Hierdurch wird eine maximale Ausnutzung der Wandlerauflösung gewährleistet. Um die AD-Wandler nicht durch die in den Komponenten I, Q vorhandenen Gleichanteile an ihr durch eine Referenzspannung vorgegebenes Spannungslimit zu bringen, werden nur die durch einen Tropfen verursachten Wechselanteile verstärkt.

Weiterhin umfasst die Auswertungseinheit 50 die bereits im Zusammenhang mit der Figur 1 beschriebene Modulationswertermittlungseinheit 51 und die Detektionsfiltereinheit 52. Diese Teileinheiten der Auswertungseinheit 50 sind in dem in Figur 3 gezeigten zweiten Ausführungsbeispiel Teil der Steuereinrichtung 60. In der Modulationswertermittlungseinheit 51 werden die digitalisierten Signalkomponenten I, Q mathematisch aufbereitet und in Amplituden- und Phaseninformationen transformiert, beispielsweise mit Hilfe der Polarkoordinatentransformation. Die Detektionsfiltereinheit 52 lässt sich zum Beispiel als parametrierbarer Softwarefilter ausbilden, mit dem anhand der erfassten Informationen ermittelt wird, ob ein Tropfen das von der Modulationseinheit 30 gebildete Sensorsystem passiert hat. Bevor das System 11a seinen regulären Betrieb aufnimmt, muss es durch zwei voneinander getrennt ablaufende Initialisierungsvorgänge eingestellt werden.

Zum einen müssen sämtliche Hardware-Baugruppen auf einen für die Detektion optimalen Arbeitspunkt eingestellt werden. Diese Einstellungen umfassen die Festlegung des Arbeitspunktes des Lichtsensors 32 durch das Trägersignal-Tastverhältnis, die Frequenzabstimmung des Trägersignals TS auf die Filterkennlinie des Bandpassfilters 42, die Einstellung der Phasenlage der Mischersignale PWM_1... PWM_4 in Relation zum Trägersignal zur genauen Seitenbandselektion, die Findung des optimalen Verstärkungsfaktors des Transimpedanzverstärkers 41 sowie die Signalanpassung der I- und Q-Signale für die AD-Wandler der Eingänge 53, 54 durch die ADC-Vorverstärker 44, 45.

Zum anderen müssen alle Parameter der Detektionsfiltereinheit 52, bezogen auf die zu erwartenden Soll-Tropfen TR, justiert werden. Dies umfasst die Zeitfenster für die Suche der Ableitungsmaxima für die Amplituden- und Phasenwerte, die erlaubten relativen Abweichungsbreiten der Vergleichswerte von den Referenzwerten der Amplituden- und Phasenwerte sowie die erlaubten absoluten Bereiche der Referenzwerte der Amplituden- und Phasenwerte. Sowohl die Hardware- als auch die Filter Einstellungen können manuell oder durch automatische Trainingsprozesse eingestellt werden. Diese Einstellungen werden für die Modulationswertgewinnung sowie die Signalbeurteilung hinsichtlich der Erkennung eines Tropfens TR benötigt.

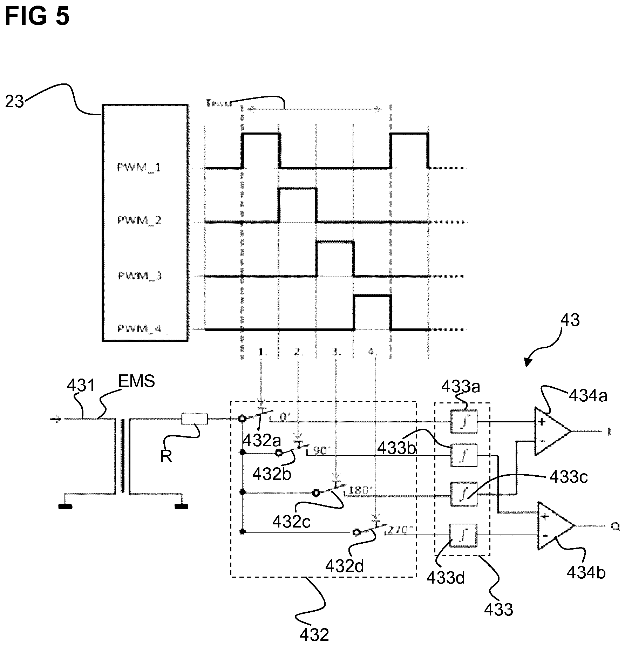

In Figur 4 ist eine Modulationseinheit 30, wie sie in dem Beispiel gemäß Figur 3 eingesetzt werden kann, im Detail gezeigt. Die Modulationseinheit 30 umfasst in dem in Figur 4 gezeigten Ausführungsbeispiel eine Leuchtdiode 31 und einen Lichtsensor 32. Das von der Leuchtdiode 31 erzeugte gepulste Licht TS wird mit Hilfe eines ersten Lichtleiterelements L1 durch ein Emissionsfenster 14 einem Zwischenraum ZR zugeführt, in dem eine Trajektorie eines von einem Dosierventil DV (mit einer Düseneinstellmutter DEM) emittierten Tropfens TR verläuft. Von dem Tropfen TR wird das gepulste Licht TS zu einem modulierten Lichtsignal MS moduliert. Das modulierte Lichtsignal MS wird über ein Detektionsfenster 15 in ein zweites Lichtleiterelement L2 eingekoppelt und dem Lichtsensor 32 zugeführt. Da das erfindungsgemäße Detektionsverfahren sehr unempfindlich gegen Streulicht und andere Störung, jedoch höchst empfindlich gegenüber dem Nutzsignal ist, ist es vorteilhafterweise nicht erforderlich, am Emissionsfenster 14 des ersten Lichtleiterelements L1 oder am Detektionsfenster 15 des zweiten Lichtleiterelements L2 zusätzliche optische Elemente, wie z. B. Linsensysteme oder dergleichen, einzusetzen. Die Aus- bzw. Eintrittsseiten der Lichtwellenleiterelemente L1, L2 müssen möglichst plansenkrecht zur Längsachse der Lichtwellenleiter L1, L2 sein. Da sich der Lichtsensor 32 und die Lichtemissionseinheit 31 außerhalb des von dem Dosierventil DV eingenommenen Arbeitsbereichs befinden, können der Lichtsensor 32 und die Lichtemissionseinheit 31 unabhängig von den im Bereich der Düseneinstellmutter DEM des Dosierventils vorherrschenden beengten Platzverhältnissen dimensioniert sein. Die Lichtemissionseinheit 31 dient als Signalwandler, welcher das unmodulierte elektrische Trägersignal TS in ein unmoduliertes Lichtsignal LS wandelt. Der Lichtsensor 32 dient als Signalwandler, welcher das modulierte Lichtsignal MS in ein moduliertes elektrisches Messsignal EMS wandelt. Die anschließende Verarbeitung des modulierten elektrischen Messsignals EMS ist im Zusammenhang mit den Figuren 3 und 5 ausführlicher beschrieben.

In Figur 5 ist eine Mischereinheit 43, in dieser Ausführungsform ein Quadraturdemodulator, im Detail gezeigt.

Der Quadraturdemodulator 43 umfasst einen Übertrager 431, eine Schaltereinheit 432 mit parallel geschalteten Schaltern 432a, 432b, 432c, 432d eine Integratoreinheit 433 mit den parallel geschalteten Schaltern 432a, 432b, 432c, 432d jeweils nachgeschalteten Integratoren 433a, 433b, 433c, 433d sowie einen ersten und einen zweiten Differenzverstärker 434a, 434b, welche jeweils mit zwei Integratoren elektrisch verbunden sind. Der Quadraturdemodulator 43 wirkt als Einseitenbandmischer und setzt das elektrische modulierte Messsignal EMS wieder zurück in das Basisband. Das für die Demodulation verwendete Seitenband wird durch eine passende Wahl der Phasenlage des modulierten Messsignals EMS in Bezug zu vier Steuersignalen PWM_1, ..., PWM_4, welche die Schalter 432a, 432b, 432c, 432d des Mischers 43 steuern, über die Differenzverstärker 434a, 434b, welche den Integratoren 433a, 433b, 433c, 433d nachgeschaltet sind, selektiert. Als Ausgangssignale der Differenzverstärker 434a, 434b werden Inphase-Signale I und Quadratur-Signale Q erzeugt.

Im Einzelnen funktioniert die Mischereinheit 43 wie folgt: Ein Messsignal EMS wird von dem Übertrager 431 auf den Eingang der Mischereinheit 43 übertragen. Der Übertrager 431 dient der Leistungsanpassung zwischen verschiedenen Bauteilen sowie der Signalsymmetrierung und der Entfernung von bestehenden Gleichanteilen. Weiterhin umfasst der Mischer 43 einen Widerstand R, der seriell zu dem Ausgang des Übertragers geschaltet ist und mit den Integratoren 433a, 433b, 433c, 433d zusammen einen Filter bildet. Die Schalter 432a, 432b, 432c, 432d werden von der zweiten Signalgenerierungseinheit 23 mit Steuersignalen PWM_1, ..., PWM_4 beaufschlagt bzw. getaktet, welche jeweils für ein Viertel der Periode $T_{PWM}$ bzw. eine Viertelwelle des Trägersignals TS einen der Schalter 432a, 432b, 432c, 432d durchschalten. Die Steuersignale PWM_1, ..., PWM_4 sind also mit dem Trägersignal TS synchronisiert. Ist einer der Schalter 432a, 432b, 432c, 432d geschlossen, so wird das Messsignal EMS für das Zeitintervall, in dem der jeweilige Schalter 432a, 432b, 432c, 432d geschlossen ist, von dem zugeordneten Integrator 433a, 433b, 433c, 433d zu einem Durchschnittswert aufintegriert. Die Integratoren 433a, 433b, 433c, 433d können beispielsweise parallel geschaltete Kondensatoren umfassen und erzeugen Durchschnittswerte der den einzelnen Viertelwellen des Trägersignals TS zugeordneten Abschnitte des Messsignals EMS. Ein in der ersten Viertelwelle aufintegrierter Durchschnittswert liegt an dem mit "+" gekennzeichneten positiven Eingang des ersten Differenzierers 434a und ein in der dritten Viertelwelle aufintegrierter Durchschnittswert liegt an dem mit "-" gekennzeichneten negativen Eingang des ersten Differenzierers 434a an. Ein in der zweiten Viertelwelle aufintegrierter Durchschnittswert liegt an dem positiven Eingang des zweiten Differenzierers 434b und ein in der vierten Viertelwelle aufintegrierter Durchschnittswert liegt an dem negativen Eingang des zweiten Differenzierers 434b an. An dem Ausgang des ersten Differenzierers 434a wird ein In-Phase-Signal I im Basisband erzeugt und an dem Ausgang des zweiten Differenzierers wird ein Quadratur-Signal Q im Basisband erzeugt. Details zur Funktionsweise solcher Mischeinheiten sind in US 6,230,000 B1 beschrieben.

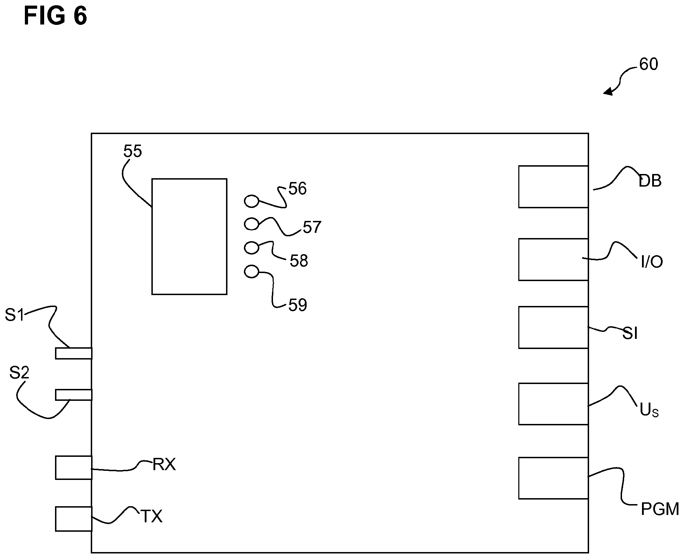

In Figur 6 ist eine Außenansicht (eines Gehäuses) einer Steuereinrichtung 60 gezeigt, mit der die Ansteuerung einzelner Einheiten einer Tropfendetektionseinrichtung 11, 11a, 11b, die Auswertung von Messsignalen, die Überwachung der Funktionsfähigkeit einzelner Einheiten und die Einstellung und Abstimmung einzelner Systemparameter vorgenommen werden kann. In diesem Gehäuse ist die gesamte Elektronik untergebracht. Dies betrifft im Prinzip das Gesamtsystem der Tropfendetektion inkl. der optoelektronischen Signalwandler (Empfänger-Fotodiode 32, und Sende-LED 31). Diese stellen die Grenze zur "optischen Strecke" dar, d. h. dem Sende-Lichtwellenleiter L1, dem Emissionsfenster und der Tropfenstrecke T, welche extern liegt.

Der Datenbus-Anschluss DB soll zukünftig unter anderem der Kommunikation mit der Ventil-Steuereinheit dienen. Beispielsweise können über diesen Datenbus-Anschluss DB der momentane Status der Tropfendetektion oder auch Statistiken zu den vergangenen Dosierprozessen (Anzahl detektierter Fehler, und wann diese aufgetreten sind) an diese übermittelt werden. Eine weitere Anwendungsmöglichkeit für diesen Datenbus-Anschluss DB besteht darin, dass die Tropfendetektion die Ventil-Steuereinheit über diesen Bus auffordern könnte, absichtlich Fehl-Dosierungen zu veranlassen, um die korrekte Funktion der Tropfendetektion zu überprüfen. Diese müsste dann diese absichtlichen Fehl-Dosierungen sicher detektieren.

Teil der Steuereinrichtung 60 ist auch eine Kommunikationsschnittstelle I/O, mit der Triggersignale von der Ventil-Steuereinheit 70 empfangen werden und über die Informationen bezüglich des Systemstatus der Tropfendetektionseinrichtung und des Dosierungsstatus ausgegeben werden.

Weiterhin umfasst die Steuereinrichtung 60 eine serielle Schnittstelle SI, welche als Anschluss an einen übergeordneten Prozessleitrechner 80 dient. Der Prozess-Leitrechner 80 kann über die serielle Schnittstelle SI die Tropfendetektion steuern und/oder Statusberichte zu den vergangenen Dosierungen abfragen.

Die Steuereinrichtung 60 weist zudem einen Eingang RX auf, der als Anschluss des Empfangs-Lichtwellenleiters L2 an das Fotoelement 32 dient. Ein Ausgang TX dient als Anschluss des Sende-Lichtwellenleiters L1 an die Sende-Leuchtdiode 31. Ein weiterer Eingang $U_S$ dient der Spannungsversorgung der Steuereinrichtung 60. Ein zusätzlicher Eingang PGM kann als Programmierbuchse zur Firmwareübertragung genutzt werden.

Überdies umfasst die Steuereinrichtung 60 ein Display 55 sowie mehrere Kontrollleuchten 56, ...,59. Eine erste Kontrollleuchte 56 dient der Anzeige verschiedener Systemfehler. Eine zweite Kontrollleuchte 57 dient der Anzeige eines Systemstatus bzw. einer Aktivität des Systems. Dieser Status kann beispielsweise den Sachverhalt betreffen, dass ein Lichtwellenleiter L1, L2 nicht richtig angeschlossen, beschädigt, zu lang oder verschmutzt ist. Eine dritte Kontrollleuchte 58 kann eine Mitteilung darüber beinhalten, dass ein Tropfen mit einer korrekten Dosierung detektiert wurde. Eine vierte Kontrollleuchte 59 kann eine Mitteilung umfassen, dass ein Fehler bei der Dosierung aufgetreten ist, dass also zum Beispiel kein Tropfen detektiert wurde oder der detektierte Tropfen eine zu große Abweichung von einem Soll-Tropfen aufweist.

Die Steuereinrichtung 60 umfasst zwei Druckschalter S1, S2 zum Abstimmen einzelner Einheiten einer Tropfendetektionseinrichtung. Beispielsweise wird durch Drücken des einen Schalters S1 für eine definierte Zeitspanne (hier z. B. 2 s) ein erster Trainingsmodus, ein "Hardware-Trainingsmodus", eingeschaltet, in dem zum Beispiel das Einstellen einer Pulsweite des Trägersignals TS, so dass eine optimale Helligkeit der Lichtemissionseinheit 31 in Bezug auf das die Lichtsensoreinheit erreichende Restlicht eines auf Basis des Trägersignals TS gebildeten Lichtstrahls erreicht wird, das Festlegen einer Frequenz des gepulsten Trägersignals TS, so dass die beiden Seitenbänder des modulierten Signals EMS eine der Sensoreinrichtung nachgeschaltete Filtereinheit 42 passieren können, das Einstellen der Phasenlage des Trägersignals TS über das Signal PWM_5 in Relation zu den Steuersignalen PWM_1,...,PWM_4, mit welchen die der Demodulationseinheit zugehörige Mischereinheit 43 angesteuert wird, und das Einstellen der Verstärkereinheiten 44 und 45 zur Spannungsanpassung sowie der Verstärkereinheit 41, welche als Transimpedanzverstärker wirkt, erfolgt. Dieser Hardware-Trainingsmodus wird z. B. bei einer ersten Inbetriebnahme der Tropfendetektionseinrichtung durchgeführt oder wenn Hardwarekomponenten getauscht wurden.

Durch Drücken des anderen Schalters S2 für eine definierte Zeitspanne (auch z. B. 2 s) wird ein zweiter Trainingsmodus, ein "Software-Trainingsmodus", eingeschaltet, in dem z. B. die Detektionsfiltereinheit 52 sowie die Modulationswertermittlungseinheit 51 der Auswertungseinheit 50 auf einen neuen Tropfentyp trainiert wird. Hierbei werden die relativen erlaubten Schwankungsbreiten der Vergleichswerte in Relation zu den Referenzwerten, die Erfassungszeitfenster der für die Detektionsfiltereinheit 52 relevanten Werte sowie die absoluten Wertebereiche der Referenzwerte festgelegt. Dieser Software-Trainingsmodus wird z. B. dann durchgeführt, wenn eine neue Prüfserie ansteht, d. h. eine andere Sorte von Tropfen detektiert werden soll.

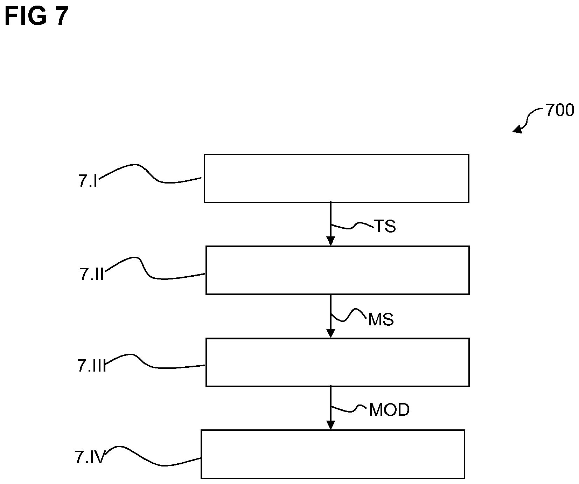

In Figur 7 ist ein Flussdiagramm gezeigt, mit dem ein Verfahren 700 zum Detektieren eines Tropfens eines Dosierventils DV veranschaulicht ist. Bei dem Schritt 7.I wird ein gepulstes Trägersignal TS mit einer definierten Pulsfrequenz und einem definierten Tastverhältnis erzeugt. Bei dem Schritt 7.II wird ein moduliertes Messsignal MS durch eine physikalische Wechselwirkung des Trägersignals TS mit einem zu detektierenden Tropfen TR, der von dem Dosierventil DV abgegeben wurde, erzeugt. Bei dem Schritt 7.III wird ein Modulationssignal MOD auf Basis des modulierten Messsignals MS ermittelt. Anschließend wird bei dem Schritt 7.IV auf Basis des Modulationssignals MOD ermittelt, ob ein Tropfen TR von dem Dosierventil DV abgegeben wurde.

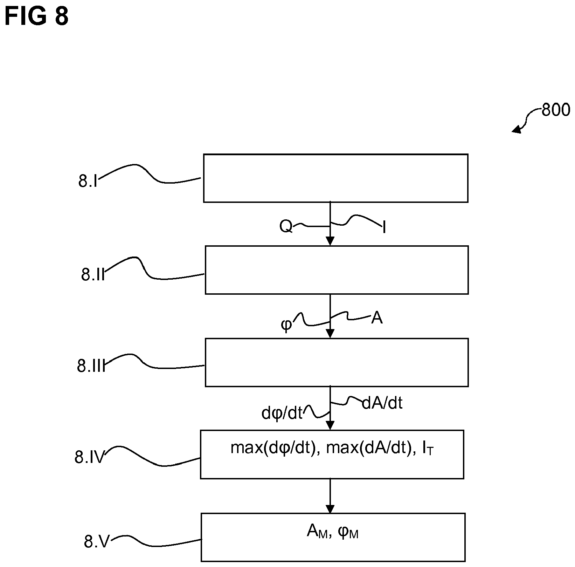

In Figur 8 ist das Funktionsprinzip 800 der in den Figuren 1 und 3 gezeigten Modulationswertermittlungseinheit 51 einer Auswertungseinheit 50 im Detail veranschaulicht. Bei dem Schritt 8.I erfasst die Modulationswertermittlungseinheit 51 Inphase- und Quadraturkomponenten I, Q von den den in Figur 2 gezeigten Eingängen 53, 54 der Steuereinheit 60 nachgeschalteten AD-Wandlern der Auswertungseinheit 50. Die Abtastung des Inphase-Signals I und des Quadratursignals Q erfolgt kontinuierlich. Dabei werden die beiden Werte I, Q bevorzugt absolut zeitgleich gewonnen. Die Werte I, Q durchlaufen vor ihrer Weiterverarbeitung einen Median- als auch Mittelwertfilter, um Extremwerte, hervorgerufen durch Störeinstrahlung, ADC-Wandlungsfehler usw. zu entfernen. Bei dem Schritt 8.II werden die Signalkomponenten I, Q mit Hilfe einer Polarkoordinatentransformation in ein Signal MOD(A, $\varphi$) gewandelt, welches Informationen bezüglich der Amplitude A und der Phase $\varphi$ des Modulationssignals MOD umfasst. Beispielsweise ergibt sich die Amplitude A wie folgt:

$$A = \sqrt{I^2 + Q^2} \ . \tag{1}$$

Weiterhin ergibt sich die Phase $\varphi$ des Modulationssignals MOD aus folgender Gleichung:

$$\varphi = \arctan(\frac{Q}{I}). \tag{2}$$

Dabei entsprechen I und Q den Amplituden der Inphase- und Quadraturkomponenten I, Q des demodulierten Signals bzw. des Modulationssignals MOD. Die Amplitude A und die Phase $\varphi$ sind wie die Signalkomponenten I und Q zeitabhängige Größen. Aufgrund der hohen Abtastrate und der damit verbundenen schnellen Wertegewinnung werden die Berechnungen gemäß Gleichung 1 und 2 über Look-up-Tabellen mit linearer Zwischenwertinterpolation durchgeführt.

Im Schritt 8.III erfolgt eine zeitliche Ableitung der Amplitude A und der Phase $\varphi$ des Modulationssignals MOD(A, $\varphi$). Im Schritt 8.IV werden Ableitungswerte dA/dt, d$\varphi$/dt in einem vorbestimmten Zeitintervall $I_T$ betrachtet und eine vorab bestimmte Anzahl von Maximalwerten der Ableitungswerte dA/dt, d$\varphi$/dt, zum Beispiel die größten 10 Werte, in dem Zeit-intervall $I_T$ selektiert. Das Zeitintervall $I_T$ kann zum Beispiel vorab bei der Initialisierung des Gesamtsystems bzw. während des Detektionsfiltertrainings festgelegt werden. Bei dem Schritt 8.V werden Modulationswerte $A_M$, $\varphi_M$ für die Amplitude A und die Phase $\varphi$ als Summe über die vorab bestimmte Anzahl von Maximalwerten gebildet.

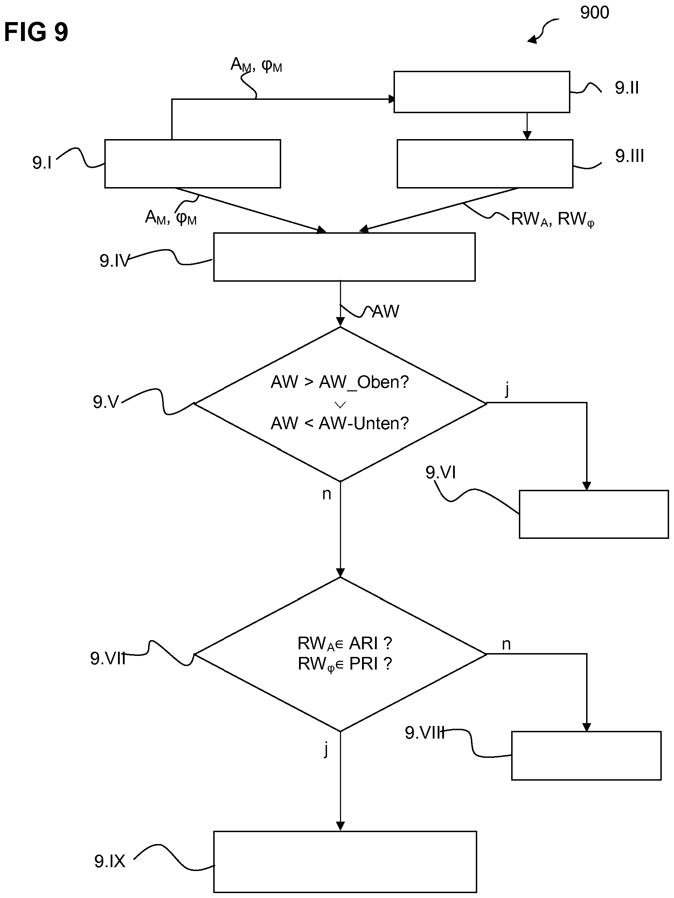

In Figur 9 ist das Funktionsprinzip 900 der in den Figuren 1, 3 und 10 gezeigten Detektionsfiltereinheit 52 der Auswertungseinheit 50 im Detail veranschaulicht. Bei dem Schritt 9.I werden von der Modulationswertermittlungseinheit 51 nach dem in Figur 8 veranschaulichten Verfahren ermittelte Modulationswerte $A_M$, $\varphi_M$ für die Amplitude A und die Phase $\varphi$, auch Vergleichswerte genannt, empfangen. Bei dem Schritt 9.II werden diese Vergleichswerte $A_M$, $\varphi_M$ in einem elektronischen Speicher abgespeichert. Weiterhin werden bei dem Schritt 9.III die gespeicherten Vergleichswerte zur Referenzwertberechnung herangezogen. Es werden Referenzwerte $RW_A$, $RW_\varphi$ für die Amplitude A und die Phase $\varphi$ ermittelt. Diese Referenzwerte $RW_A$, $RW_\varphi$ können beispielsweise Mittelwerte aus älteren Amplituden- und Phasenwerten sein, d. h. Vergleichswerten, die zum Beispiel bei einer früheren Detektion von Tropfen gewonnen wurden.

Bei dem Schritt 9.IV wird eine Abweichung AW der von der Modulationswertermittlungseinheit 51 ermittelten Modulationswerte $A_M$, $\varphi_M$ für die Amplitude A und die Phase $\varphi$ von den Referenzwerten $RW_A$, $RW_\varphi$ berechnet. Anschließend erfolgt bei dem Schritt 9.V ein Vergleich zwischen der jeweils ermittelten Abweichung AW und einer maximal erlaubten relativen Abweichung nach oben AW_Oben bzw. nach unten AW_Unten. Falls die Abweichung zu groß ist, was in Figur 9 mit "j" gekennzeichnet ist, so wird bei dem Schritt 9.VI gemeldet, dass ein fehlerhafter Tropfen ermittelt wurde. Das Maß der erlaubten Abweichung AW_Oben bzw. AW_Unten wird anhand eines oder mehrerer Soll-Tropfen bei einem Initialisierungsvorgang bzw. im erwähnten Software-Trainingsmodus der Tropfendetektionseinrichtung ermittelt.

Um einen schleichenden Fehler, zum Beispiel das Phänomen, dass sich die Größe der zu detektierenden Tropfen TR während einer häufig wiederholten Abgabe von Tropfen TR aus einem Dosierventil DV sehr langsam ändert, ebenfalls erkennen zu können, werden auch die Referenzwerte $RW_A$, $RW_\varphi$, d. h. zum Beispiel die Mittelwerte über die Modulationswerte $A_M$, $\varphi_M$ von vergangenen Tropfen überwacht. Bei dem Schritt 9.VII wird ermittelt, ob die Referenzwerte $RW_A$, $RW_\varphi$ für Amplitude A und Phase $\varphi$ in einem vorbestimmten absoluten Werteintervall ARI, PRI liegen. Falls die Referenzwerte $RW_A$, $RW_\varphi$ nicht in dem vorbestimmten Werteintervall ARI, PRI liegen, was in Figur 9 mit "n" gekennzeichnet ist, so wird bei dem Schritt 9.VIII eine Meldung ausgegeben, dass nun eine Folge fehlerhafter Tropfen vorliegt. Die Auflösung dieses Fehlerfalls erfolgt erst nach einer Stabilisierung des Mittelwerts, d. h., wenn wieder ein gültiger Referenzwert über die vorausgegangenen Tropfen vorliegt. Falls die Referenzwerte $RW_A$, $RW_\varphi$ in dem vorbestimmten Werteintervall ARI, PRI liegen und die Relation der Modulationswerte $A_M$, $\varphi_M$, des aktuellen Tropfens zu den Referenzwerten $RW_A$, $RW_\varphi$ innerhalb des tolerierten relativen Bereichs liegt, was in Figur 9 mit "j" gekennzeichnet ist, so wird bei dem Schritt 9.IX eine Meldung ausgegeben, dass ein korrekter Tropfen detektiert wurde. Die Ausgabe der Ergebnisse kann zum Beispiel über die in Figur 6 gezeigten Kontrollleuchten 58, 59 erfolgen.

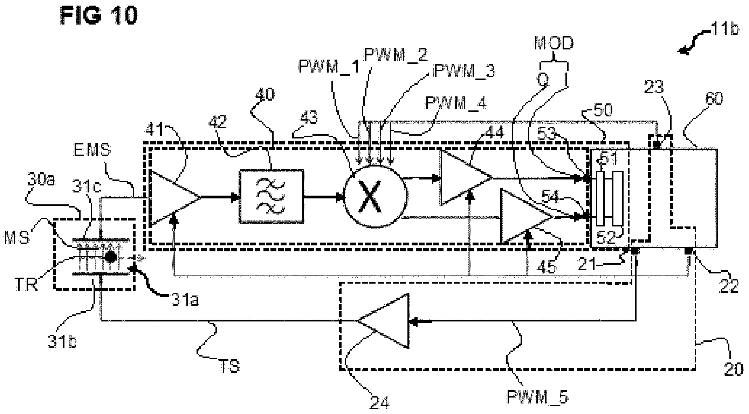

In Figur 10 ist eine Tropfendetektionseinrichtung 11b gemäß einem weiteren Ausführungsbeispiel der Erfindung im Detail gezeigt. Die Tropfendetektionseinrichtung 11b umfasst wie die in Figur 2 gezeigte Anordnung 11a gemäß einem zweiten Ausführungsbeispiel eine Signalerzeugungseinheit 20, welche in Figur 9 gestrichelt eingezeichnet ist. Die Signalerzeugungseinheit 20 umfasst in dem dritten Ausführungsbeispiel eine Sendesignalgenerierungseinheit 21, welche ein Sendesignal PWM_5 zum Beispiel als gepulstes pulsweitenmoduliertes Rechtecksignal erzeugt. Das erzeugte Sendesignal PWM_5 wird an einen Leistungsverstärker 24 übermittelt, welcher das Sendesignal PWM_5 zu einem Trägersignal TS verstärkt. Die Signalerzeugungseinheit 20 umfasst eine zweite Signalgenerierungseinheit 23, welche dazu eingerichtet ist, gegenüber dem Trägersignal phasenverschobene gepulste Ansteuersignale PWM_1,..., PWM_4 an eine Mischereinheit 42 zu übermitteln.

Das Trägersignal TS wird von dem Verstärker 24 an eine Modulationseinheit 30 übermittelt. Die Modulationseinheit 30a umfasst, anders als die in Figur 2 gezeigte Modulationseinheit, einen Kondensator 31a, vorzugsweise einen Plattenkondensator mit einer ersten und einer zweiten Kondensatorplatte 31b, 31c. In dem in Figur 9 gezeigten Ausführungsbeispiel wird also als Signalwandler statt der in Figur 2 gezeigten Leuchtdiode 31 und des in Figur 2 gezeigten Fotodetektors 32 ein Kondensator 31a verwendet. Der Kondensator 31a ermöglicht eine kapazitive Einkopplung des Trägersignals TS vom Sendezweig in den Empfangszweig. Der Kondensator 31a wird derart positioniert, dass eine Trajektorie T eines Tropfens TR, der von einem Dosierventil DV emittiert wurde, zwischen den Kondensatorplatten 31b, 31c des Kondensators 31a, senkrecht zum Feldlinienverlauf des sich ausbildenden elektrischen Feldes, verläuft. Mit dem Tropfen TR wird die zwischen Sende- und Empfangszweig erzielte Kopplung beeinflusst. Diese Kopplung ist abhängig vom Blindwiderstand $X_c$ des Kondensators 31a. Leichte Änderungen des Blindwiderstands $X_c$ des Kondensators 31a, welche durch einen durchfliegenden Tropfen TR verursacht werden, führen zu einer Modulation des Trägersignals TS. Der Blindwiderstand $X_c$ ist durch folgende Beziehung gegeben:

$$X_c = \frac{1}{2 \cdot \pi \cdot f \cdot C} \,. \tag{3}$$

Dabei ist f die Frequenz des an dem Kondensator 31a anliegenden Trägersignals TS und C die Kapazität des Kondensators 31a. Bei konstanter Trägerfrequenz f hängen Änderungen $\Delta X_c$ des Blindwiderstands $X_c$ also nur von Änderungen $\Delta C$ der Kapazität des Kondensators 31a ab. Die Kapazität des Kondensators 31a ergibt sich aus folgender Formel zu:

$$C = \varepsilon_0 \cdot \varepsilon_r \cdot \frac{A}{d}. \qquad\qquad (4)$$

Dabei stehen $\varepsilon_0$ für die Dielektrizitätskonstante, $\varepsilon_r$ für die Permittivität des Kondensators 31a, A für die Fläche der Kondensatorplatten 31b, 31c und der Parameter d für den Abstand zwischen den Kondensatorplatten 31b, 31c. Da die Fläche A der Kondensatorplatten 31b, 31c sowie der Abstand d zwischen den Kondensatorplatten 31b, 31c nicht geändert werden, ist eine Änderung der Kapazität C und damit des Blindwiderstands $X_c$ nur abhängig von einer Änderung $\Delta\varepsilon_r$ der materialspezifischen Permittivität $\varepsilon_r$. Tritt ein Tropfen TR in den Zwischenraum zwischen den beiden Kondensatorplatten 31b, 31c ein, so ändert sich die Permittivität $\varepsilon_r$ in diesem Bereich in Abhängigkeit von der Dosierung und dem Material des Tropfens. Die Modulation des Trägersignals TS resultiert also aus der durch den Tropfen verursachten Schwankung der Permittivität $\varepsilon_r$. Lichtwellenleiter sind in dieser Ausführungsform nicht nötig. Dafür müssen die Kondensatorplatten 31b, 31c relativ nah an der Flugbahn des Tropfens TR und damit bei dem Ausgang des Dosierventils DV positioniert sein.

Das von einem Tropfen TR möglicherweise modulierte Messsignal MS wird als moduliertes elektrisches Messsignal EMS von der Modulationseinheit 30 an eine Auswertungseinheit 50 übermittelt. Die Auswertungseinheit 50 umfasst wie bei dem in Figur 2 gezeigten Ausführungsbeispiel eine Demodulationseinheit 40, welche im Wesentlichen auch die gleichen Komponenten mit den gleichen Funktionen aufweist wie die Demodulationseinheit 40 bei dem Ausführungsbeispiel gemäß Figur 2.

Die Demodulationseinheit 40 weist also eine Verstärkereinheit 41 auf, welche das modulierte elektrische Messsignal EMS verstärkt. Die Verstärkereinheit 41 dient zur Vorverstärkung des von der Modulationseinheit 30 erfassten modulierten elektrischen Messsignals EMS und wird von einem Steuerungssignalausgang 22 der Signalerzeugungseinheit 20 angesteuert. Sie ist hier als normaler Spannungsverstärker ausgeführt, und nicht wie bei der optischen Detektionsvariante als Transimpedanzverstärker. Weiterhin umfasst die Demodulationseinheit 40 auch eine Filtereinheit 42. Die Filtereinheit 42 kann zum Beispiel einen Bandpassfilter umfassen, welcher nur die beiden Seitenbänder und die Trägerfrequenz des modulierten elektrischen Messsignals EMS durchlässt. Die Filtereinheit 42 entfernt außerdem eventuelle durch Störfelder verursachte Störsignale, welche beispielsweise von der Frequenz des Trägersignals TS weit entfernte Frequenzen umfassen. Zudem entfernt die Filtereinheit, bevorzugt ein steilflankiger Bandpassfilter, auch durch die Pulsweitenmodulation erzeugte Oberwellen. Das so gefilterte modulierte elektrische Messsignal EMS wird anschließend an einen Mischer 43 weitergeleitet, der das modulierte und gefilterte Messsignal EMS mit von der zweiten Signalgenerierungseinheit 23 erzeugten, gegenüber dem Trägersignal phasenverschobenen gepulsten Ansteuersignalen PWM_1,..., PWM_4 mischt und an einen In-Phase-Signalverstärker 44 ein In-Phase-Signal bzw. eine In-Phase-Komponente I übermittelt und an einen Quadratur-Signal-Verstärker 45 ein Quadratur-Signal bzw. eine Quadraturkomponente Q übermittelt. Die phasenrichtige Ansteuerung des Mischers 43 bewirkt die Demodulation nur eines Seitenbandes. Der In-Phase-Signalverstärker 44 und der Quadratur-Signal-Verstärker 45 werden von einem Steuerungssignalausgang 22 der Signalerzeugungseinheit 20 angesteuert. Die Verstärker 41, 44, 45 werden getrennt voneinander angesteuert. Sie werden über einen über einen Datenbus (z.B. I2C-Bus) programmierbaren veränderlichen Widerstand (Rheostat) eingestellt. Jeder Rheostat (und damit Verstärker) wird hierbei einzeln verstellt. Die Einstellung des Verstärkers 41 ist dabei vom Wert her völlig unabhängig von den Verstärkern 44 und 45. Die Verstärker 44 und 45 weisen jedoch immer denselben Wert auf, um die Relation zwischen dem I- und dem Q-Signal nicht zu verändern. Dennoch werden auch diese beiden getrennt voneinander angesteuert.

Nach der Verstärkung der beiden Signalkomponenten I, Q in den Verstärkern 44, 45 werden die beiden Komponenten I, Q innerhalb der Auswertungseinheit 50 an die Teileinheiten der Auswertungseinheit 50 übermittelt, welche in dem in Figur 2 gezeigten Ausführungsbeispiel Teil der Steuereinheit 60 sind. Die Steuereinheit 60 umfasst Eingänge 53, 54 für die Signalkomponenten I, Q. Den Eingängen 53, 54 nachgeschaltet sind auch AD-Wandler (nicht gezeigt), welche die analogen Signalkomponenten I, Q in digitale Signale wandeln. Die Verstärker 44, 45 der Demodulationseinheit 40 sind in ihrem Verstärkungsfaktor anpassbar und dienen dazu, die von der Mischereinheit 43 erzeugten Signalkomponenten I, Q auf ein für die AD-Wandler optimales Spannungsniveau anzuheben. Hierdurch wird eine maximale Ausnutzung der Wandlerauflösung gewährleistet. Um die AD-Wandler nicht durch die in den Komponenten I, Q vorhandenen Gleichanteile an ihr durch eine Referenzspannung vorgegebenes Spannungslimit zu bringen, werden nur die durch einen Tropfen verursachten Wechselanteile verstärkt. Weiterhin umfasst die Auswertungseinheit 50 auch eine Modulationswertermittlungseinheit 51 und eine Detektionsfiltereinheit 52. Die Auswertungseinheit 50 ist in dem in Figur 9 gezeigten Ausführungsbeispiel Teil einer Ansteuerungseinheit 60.

In der Modulationswertermittlungseinheit 51 werden die digitalisierten Signalkomponenten I, Q mathematisch aufbereitet und in Amplituden- und Phaseninformationen, beispielsweise mit Hilfe der Polarkoordinatentransformation, transformiert. Die Detektionsfiltereinheit 52 lässt sich zum Beispiel als parametrierbarer Softwarefilter ausbilden, mit dem anhand der erfassten Informationen ermittelt wird, ob ein Tropfen das von der Modulationseinheit 30a gebildete Sensorsystem passiert hat. Bevor das System 11a seinen regulären Betrieb aufnimmt, muss es durch zwei voneinander getrennt ablaufende Initialisierungsvorgänge eingestellt werden. Zum einen müssen sämtliche Hardware-Baugruppen auf einen für die Detektion optimalen Arbeitspunkt eingestellt werden. Diese Einstellungen umfassen die Frequenzabstimmung des Trägersignals TS auf die Filterkennlinie des Bandpassfilters 42, die Einstellung der Phasenlage der Mischersignale PWM_1... PWM_4 in Relation zum Trägersignal zur genauen Seitenbandselektion, die Findung des optimalen Verstärkungsfaktors des Transimpedanzverstärkers 41 sowie die Signalanpassung der I- und Q-Signale für die AD-Wandler der Eingänge 53, 54 durch die ADC-Vorverstärker 44, 45.

Zum anderen müssen alle Parameter der Detektionsfiltereinheit 52, bezogen auf die zu erwartenden Soll-Tropfen TR, justiert werden. Dies umfasst die Zeitfenster für die Suche der Ableitungsmaxima für die Amplituden- und Phasenwerte, die erlaubten relativen Abweichungsbreiten der Vergleichswerte von den Referenzwerten der Amplituden- und Phasenwerte sowie die erlaubten absoluten Bereiche der Referenzwerte der Amplituden- und Phasenwerte. Sowohl die Hardware- als auch die Filter-Einstellungen können manuell oder durch automatische Trainingsprozesse eingestellt werden

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso soll der Begriff "Einheit" auch Komponenten umfassen, die aus mehreren, gegebenenfalls auch räumlich getrennten, Untereinheiten bestehen. Zudem kann mit dem Begriff "Einheit" auch eine gedankliche logische Einheit gemeint sein, so dass ein und dieselbe Hardware-Komponente mehrere dieser logischen Einheiten umfassen kann. Dies gilt zum Beispiel insbesondere für die Modulationseinheit 30, die Demodulationseinheit 40 und ggf. auch für die Signalerzeugungseinheit 20 und die Auswertungseinheit 50.

**Patentansprüche**

1. Tropfendetektionseinrichtung (11, 11a, 11b) zur Detektion von aus einer Düse eines Dosierventils (DV), vorzugsweise eines Mikrodosierventils, austretenden Tropfen (TR), aufweisend:

   - eine Signalerzeugungseinheit (20), welche dazu eingerichtet ist, ein Trägersignal (TS) mit einer definierten Pulsfrequenz zu erzeugen,
   - eine Modulationseinheit (30, 30a), welche dazu eingerichtet ist, durch eine physikalische Wechselwirkung des Trägersignals (TS) mit einem zu detektierenden Tropfen (TR) ein moduliertes Messsignal (MS) zu erzeugen,
   - eine Auswertungseinheit (50), welche dazu eingerichtet ist, unter Berücksichtigung der definierten Pulsfrequenz auf Basis des Messsignals (MS) zu ermitteln, ob ein Tropfen (TR) von dem Dosierventil (DV) abgegeben wurde,

   **gekennzeichnet durch**
   eine Demodulationseinheit (40), die dazu eingerichtet ist, eine Quadraturdemodulation des Messsignals (MS) durchzuführen, um eine In-Phase-Komponente (I) und eine Quadratur-Komponente (Q) des demodulierten Messsignals (MOD) zu ermitteln.

2. Tropfendetektionseinrichtung nach Anspruch 1, welche so ausgebildet ist, dass eine Abgabe eines Tropfens (TR) in einem definierten Zeitfenster überprüft wird, welches mit einer Tropfenabgabesteuerung des Dosierventils (DV) synchronisiert ist.

3. Tropfendetektionseinrichtung nach Anspruch 1 oder 2, mit einer Demodulationseinheit (40), die dazu eingerichtet ist, eine Amplitudendemodulation des Messsignals (MS) durchzuführen.

4. Tropfendetektionseinrichtung nach einem der Ansprüche 1 bis 3, wobei die Auswertungseinheit (50) eine Modulationswertermittlungseinheit (51) umfasst, welche dazu eingerichtet ist, vorzugsweise auf Basis der In-Phase-Komponente (I) und der Quadratur-Komponente (Q), den Betrag der Amplitude und/oder die Phase eines auf dem modulierten Messsignal (MS) basierenden Modulationssignals (MOD) zu ermitteln.

5. Tropfendetektionseinrichtung nach Anspruch 4, wobei die Modulationswertermittlungseinheit (51) dazu eingerichtet ist, Amplituden-Ableitungswerte (dA/dt), umfassend die zeitliche Ableitung des Betrags der Amplitude, und/oder Phasen-Ableitungswerte ($d\varphi$/dt), umfassend die zeitliche Ableitung der Phase des Modulationssignals (MOD), zu ermitteln.

6. Tropfendetektionseinrichtung nach Anspruch 5, wobei in einem festen Zeit-Intervall ($I_T$) eine vorbestimmte Anzahl der Amplituden-Ableitungswerte (dA/dt) zu Amplituden-Vergleichswerten ($A_M$) und/ oder eine vorbestimmte Anzahl der Phasen-Ableitungswerte ($d\varphi$/dt) zu Phasen-Vergleichswerten ($\varphi_M$) kombiniert werden.

7. Tropfendetektionseinrichtung nach Anspruch 5, wobei in einem festen Zeit-Intervall ($I_T$) eine vorbestimmte Anzahl von Maximalwerten der Amplituden-Ableitungswerte (dA/dt) zu Amplituden-Vergleichswerten ($A_M$) und/ oder eine vorbestimmte Anzahl der Maximalwerte der Phasen-Ableitungswerte ($d\varphi$/dt) zu Phasen-Vergleichswerten ($\varphi_M$) kombiniert werden.

8. Tropfendetektionseinrichtung nach Anspruch 6 oder 7, wobei die Auswertungseinrichtung (50) eine Detektionsfiltereinheit (52) umfasst, die dazu eingerichtet ist, auf Basis der Amplituden-Vergleichswerte ($A_M$) und/oder der Phasen-Vergleichswerte ($\varphi_M$) zu ermitteln, ob das Modulationssignal (MOD) einen Tropfen (TR) indiziert.

9. Tropfendetektionseinrichtung nach Anspruch 8, wobei die Detektionsfiltereinheit (52) dazu eingerichtet ist, eine relative Abweichung eines von der Modulationswertermittlungseinheit (51) ermittelten Amplituden-Vergleichswerts ($A_M$) von einem Amplituden-Referenzwert ($RW_A$) zu ermitteln und/oder eine relative Abweichung eines von der Modulationswertermittlungseinheit (51) ermittelten Phasen-Vergleichswerts ($\varphi_M$) von einem Phasen-Referenzwert ($RW_\varphi$) zu ermitteln.

10. Tropfendetektionseinrichtung nach Anspruch 9, aufweisend eine Referenzwert-Speichereinrichtung, in der ein Amplituden-Referenzwert ($RW_A$), welcher aus einer Mehrzahl von Amplituden-Vergleichswerten ($A_M$) von vorher erfassten Modulationssignalen (MOD) gebildet ist und/oder ein Phasen-Referenzwert ($RW_\varphi$), welcher aus einer Mehrzahl von Phasen-Vergleichswerten ($\varphi_M$) von vorher erfassten Modulationssignalen (MOD) gebildet ist, als variable Referenzwerte gespeichert sind.

11. Tropfendetektionseinrichtung nach Anspruch 9 oder 10, wobei die Detektionsfiltereinheit (52) dazu eingerichtet ist, zu ermitteln, ob die ermittelte relative Abweichung des Amplituden-Vergleichswerts ($A_M$) vom Amplituden-Referenzwert ($RW_A$) und/oder die ermittelte relative Abweichung des Phasen-Vergleichswerts ($\varphi_M$) vom Phasen-Referenzwert ($RW_\varphi$) einen relativen unteren und oberen Grenzwert nicht überschreiten.

12. Tropfendetektionseinrichtung nach einem der Ansprüche 9 bis 11, wobei die Detektionsfiltereinheit (52) dazu eingerichtet ist, zu ermitteln, ob der für die Ermittlung der Abweichung des Amplituden-Vergleichswerts ($A_M$) verwendete absolute Amplituden-Referenzwert ($RW_A$) in einem vorbestimmten absoluten Amplituden-Referenzwertintervall (ARI) liegt und/oder ob der für die Ermittlung der Abweichung des Phasen-Vergleichswerts ($\varphi_M$) verwendete absolute Phasen-Referenzwert ($RW_\varphi$) in einem vorbestimmten absoluten Phasen-Referenzwertintervall (PRI) liegt.

13. Tropfendetektionseinrichtung nach einem der Ansprüche 1 bis 12, wobei die Modulationseinheit (30)

- eine Lichtemissionseinheit (31) und eine Lichtsensoreinheit (32)
- und/oder eine kapazitive Sensoreinheit

umfasst.

14. Tropfendetektionseinrichtung nach einem der Ansprüche 1 bis 13, wobei die Signalerzeugungseinheit (20) dazu eingerichtet ist, als Trägersignal (TS) ein Rechtecksignal zu erzeugen.

15. Verfahren (600) zum Detektieren eines Tropfens (TR) eines Dosierventils (DV), aufweisend die Schritte:

- Bereitstellen der Tropfendetektionseinrichtung (11, 11a, 11b) einer der Ansprüche 1 bis 14,
- Erzeugen eines Trägersignals (TS) mit einer definierten Pulsfrequenz,
- Beaufschlagen einer Trajektorie (T), auf der sich ein möglicher Tropfen (TR) bewegt, welcher von dem Dosierventil (DV) abgegeben wird, mit dem Trägersignal (TS), so dass ein moduliertes Messsignal (MS) durch eine physikalische Wechselwirkung des Trägersignals (TS) mit dem Tropfen (TR) erzeugt wird,
- Ermitteln auf Basis des Messsignals (MS) unter Berücksichtigung der definierten Pulsfrequenz, ob ein Tropfen (TR) von dem Dosierventil (DV) abgegeben wurde,

wobei eine Quadraturdemodulation des modulierten Messsignals (MS) durchgeführt wird, um eine In-Phase-Komponente (I) und eine Quadratur-Komponente (Q) des demodulierten Messsignals (MS) zu ermitteln.

## Claims

1. Drop-detection device (11, 11a, 11b) for the detection of drops (TR) escaping from a nozzle of a metering valve (DV), preferably a micro-metering valve, having:

   - a signal-generation unit (20), which is configured to produce a carrier signal (TS) with a defined pulse frequency,
   - a modulation unit (30, 30a) which is configured to generate a modulated measurement signal due to a physical interaction of the carrier signal (TS) with a drop to be detected (TR),
   - an evaluation unit (50), which is configured to determine if a drop (TR) has been dispensed by the metering valve (DV) based on the measurement signal (MS) taking the frequency of the defined pulse into consideration.

   **characterized in that**
   a demodulation unit (40) that is configured to carry out a quadrature demodulation of the measurement signal in order to determine an in-phase component (I) and a quadrature component (Q).

2. Drop-detection device according to claim 1, which is designed in such a way that a dispensing of a drop (TR) is checked within a defined window of time, which is synchronised with the drop dispensing control system of the metering valve (DV).

3. Drop-detection device according to claim 1 or 2 with a demodulation unit (40) that is configured to carry out an amplitude demodulation of the measurement signal (MS).

4. Drop-detection device according to one of the claims 1 to 3, wherein the evaluation unit (50) comprises a modulation valuation unit (51), which is configured, preferably based upon the in-phase component (I) and the quadrature component (Q), to determine the amount of amplitude and/or the phase of the modulation signal (MOD) based on the modulated measurement signal (MS).

5. Drop-detection device according to claim 4, wherein, the modulation valuation unit (51) is configured to determine amplitude derivative values (dA/dt), comprising the time derivative of the amplitude value and/or phase derivative values (d$\varphi$/dt), comprising the time derivative of the phase of the modulation signal (MOD).

6. Drop-detection device according to claim 5, wherein, at a fixed time interval ($I_T$), a predetermined number of amplitude derivative values (dA/dt) are combined into amplitude comparative values ($A_M$) and/or a predetermined number of phase derivative values (d$\varphi$/dt) are combined into phase comparative values ($\varphi_M$).

7. Drop-detection device according to claim 5, wherein, at a fixed time interval ($I_T$), a predetermined number of maximum values of the amplitude derivative values (dA/dt) are combined into amplitude comparative values ($A_M$) and/or a predetermined number of maximum values of the phase derivative values (d$\varphi$/dt) are combined into phase comparative values ($\varphi_M$).

8. Drop-detection device according to claim 6 or 7, wherein the evaluation device (50) comprises a detection filter unit (52), which is configured to determine if the modulation signal (MOD) indicates a drop (TR) based on the amplitude comparative values ($A_M$) and /or the phase comparative values ($\varphi_M$).

9. Drop-detection device according to claim 8, wherein the detection filter unit (52) is configured to determine a relative deviation of an amplitude comparative value ($A_M$) determined by the modulation valuation unit (51) from an amplitude reference value ($RW_A$) and/or a relative deviation of a phase comparative value ($\varphi_M$) determined by the modulation valuation unit (51) from a phase reference value ($RW_\varphi$).

10. Drop-detection device according to claim 9, having a reference value storage device, in which an amplitude reference value ($RW_A$), which is formed from a plurality of amplitude comparative values ($A_M$) from previously registered modulation signals (MOD) and/or a phase reference value ($RW_\varphi$), which is formed from a plurality of phase com-

parative values ($\varphi_M$) from previously recorded modulation signals (MOD), are stored as variable reference values.

11. Drop-detection device according to claim 9 or 10, wherein the detection filter unit (52) is configured to determine if the determined relative deviation of the amplitude comparative value ($A_M$) from the amplitude reference value ($RW_A$) and/or the determined relative deviation of the phase comparative value ($\varphi_M$) from the phase reference value ($RW_\varphi$) does not exceed a relative lower and upper limit.

12. Drop-detection device according to one of the claims 9 to 11, wherein the detection filter unit (52) is configured to determine if the absolute amplitude reference value ($RW_A$) used for determining the deviation of the amplitude comparative value ($A_M$) is within a predetermined absolute amplitude reference value range (ARI) and/or if the absolute phase reference value ($RW_\varphi$) used to determine the deviation of the phase comparative value ($\varphi_M$) is within a predetermined absolute phase reference range (PRI).

13. Drop-detection device according to claims 1 to 12, wherein the modulation unit (30) comprises

    - a light-emission unit (31) and a light-sensor unit (32)
    - and/or a capacitive sensor unit.

14. Drop-detection device according to claims 1 to 13, wherein the signal-generation unit (20) is configured to generate a square-wave signal as a carrier signal (TS).

15. A method (600) of detecting a drop (TR) of a metering valve (DV), having the steps:

    - providing of a drop detection device (11, 11a, 11b) according to claims 1 to 14,
    - generation of a carrier signal (TS) with a defined pulse frequency,
    - applying a carrier signal (TS) to a trajectory (T), on which a possible drop (TR) is moving, which is dispensed by the metering valve (DV), so that it is ensured that a modulated measurement signal (MS) is generated by a physical interaction of the carrier signal (TS) with a drop to be detected (TR),
    - determining if a drop (TR) has been dispensed by the metering valve (DV) taking the defined pulse frequency into consideration

    **characterized in that**
    a quadrature demodulation of the measurement signal is carried out in order to determine an in-phase component (I) and a quadrature component (Q).

**Revendications**

1. Dispositif de détection des gouttes (11, 11a, 11b), destiné à détecter des gouttes (TR) sortant d'une buse d'une valve doseuse (DV), de préférence d'une valve microdoseuse, comportant :

    - une unité de génération de signaux (20), laquelle est aménagée pour générer un signal porteur (TS) à une fréquence d'impulsion définie,
    - une unité de modulation (30, 30a), laquelle est aménagée pour générer par une interaction physique du signal porteur (TS) avec une goutte (TR) qui doit être détectée un signal de mesure modulé (MS),
    - une unité d'évaluation (50), laquelle est aménagée pour déterminer sur la base du signal de mesure (MS), sous considération de la fréquence d'impulsion définie, si une goutte (TR) a été distribuée par la valve doseuse (DV),

    **caractérisé par**
    une unité de démodulation (40), qui est aménagée pour procéder à une démodulation en quadrature du signal de mesure (MS), pour déterminer une composante en phase (I) et une composante en quadrature (Q) du signal de mesure démodulé (MOD).

2. Dispositif de détection des gouttes selon la revendication 1, lequel est conçu de telle sorte qu'une distribution d'une goutte (TR) dans une fenêtre de temps définie qui est synchronisée avec un système de commande de distribution de goutte de la valve doseuse (DV) soit examinée.

**3.** Dispositif de détection des gouttes selon la revendication 1 ou 2, pourvu d'une unité de démodulation (40), qui est aménagée pour procéder à une démodulation d'amplitude du signal de mesure (MS).

**4.** Dispositif de détection des gouttes selon l'une quelconque des revendications 1 à 3, l'unité d'évaluation (50) comprenant une unité de détermination de la valeur de modulation (51), laquelle est aménagée pour déterminer, de préférence sur la base de la composante en phase (I) et de la composante en quadrature (Q) le montant de l'amplitude et/ou la phase d'un signal de modulation (MOD) basé sur le signal de mesure modulé (MS).

**5.** Dispositif de détection des gouttes selon la revendication 4, l'unité de détermination de la valeur de modulation (51) étant aménagée pour déterminer des valeurs de dérivée d'amplitude (dA/dt), comprenant la dérivation temporelle du montant de l'amplitude, et/ou des valeurs de dérivée de phase (dφ/dt), comprenant la dérivation temporelle de la phase du signal de modulation (MOD).

**6.** Dispositif de détection des gouttes selon la revendication 5, dans un intervalle de temps ($I_T$) fixe, un nombre prédéfini des valeurs de dérivée d'amplitude (dA/dt) étant associé à des valeurs comparatives d'amplitude ($A_M$) et/ ou un nombre prédéfini des valeurs de dérivée de phase(dφ/dt) étant associé à des valeurs comparatives de phase ($φ_M$).

**7.** Dispositif de détection des gouttes selon la revendication 5, dans un intervalle de temps ($I_T$) fixe, un nombre prédéfini de valeurs maximales des valeurs de dérivée d'amplitude (dA/dt) étant associé à des valeurs comparatives d'amplitude ($A_M$) et/ ou un nombre prédéfini des valeurs maximales des valeurs de dérivée de phase (dφ/dt) étant associé à des valeurs comparatives de phase ($φ_M$).

**8.** Dispositif de détection des gouttes selon la revendication 6 ou 7, le système d'évaluation (50) comprenant une unité de filtrage en détection (52), qui est aménagée pour déterminer, sur la base des valeurs comparatives d'amplitude ($A_M$) et/ou des valeurs comparatives de phase ($φ_M$) si le signal de modulation (MOD) indexe une goutte (TR).

**9.** Dispositif de détection des gouttes selon la revendication 8, l'unité de filtrage en détection (52) étant aménagée pour déterminer un écart relatif d'une valeur comparative d'amplitude ($A_M$) déterminée par l'unité de détermination de la valeur de modulation (51) par rapport à une valeur référentielle d'amplitude ($RW_A$) et/ou pour déterminer un écart relatif d'une valeur comparative de phase ($φ_M$) déterminée par l'unité de détermination de la valeur de modulation (51) par rapport à une valeur référentielle de phase($RW_φ$).

**10.** Dispositif de détection des gouttes selon la revendication 9, comportant un dispositif de mémoire de valeurs référentielles dans laquelle une valeur référentielle d'amplitude ($RW_A$), laquelle est formée d'une multiplicité de valeurs comparatives d'amplitude ($A_M$) de signaux de modulation (MOD) préalablement détectés et/ou une valeur référentielle de phase ($RW_φ$), laquelle est formée d'une multiplicité de valeurs comparatives de phase ($φ_M$) de signaux de modulation (MOD) préalablement détectés sont mémorisées en tant que valeurs référentielles variables.

**11.** Dispositif de détection des gouttes selon la revendication 9 ou 10, l'unité de filtrage en détection (52) étant aménagée pour déterminer si l'écart relatif déterminé de la valeur comparative d'amplitude ($A_M$) par rapport à la valeur référentielle d'amplitude ($RW_A$) et/ou l'écart relatif déterminé de la valeur comparative de phase ($φ_M$) par rapport à la valeur référentielle de phase ($RW_φ$) ne dépassent pas une valeur limite relative inférieure ou supérieure.

**12.** Dispositif de détection des gouttes selon l'une quelconque des revendications 9 à 11, l'unité de filtrage en détection (52) étant aménagée pour déterminer si la valeur référentielle d'amplitude ($RW_A$) absolue utilisée pour déterminer l'écart de la valeur comparative d'amplitude ($A_M$) se situe dans un intervalle absolu de valeur référentielle d'amplitude (ARI) prédéfini et/ou si la valeur référentielle de phase ($RW_φ$) absolue utilisée pour déterminer l'écart de la valeur comparative de phase ($φ_M$) se situe dans un intervalle absolu de valeur référentielle de phase (PRI) prédéfini.

**13.** Dispositif de détection des gouttes selon l'une quelconque des revendications 1 à 12, l'unité de modulation (30) comprenant

- une unité émettrice de lumière (31) et une unité détectrice de lumière (32)
- et/ou une unité détectrice capacitive.

**14.** Dispositif de détection des gouttes selon l'une quelconque des revendications 1 à 13, l'unité de génération de signaux (20) étant aménagée pour générer en tant que signal porteur (TS) un signal rectangulaire.

**15.** Procédé (600), destiné à détecter une goutte (TR) d'une valve doseuse (DV), comportant les étapes consistant à :

- mettre à disposition le dispositif de détection des gouttes (11, 11a, 11b) selon l'une quelconque des revendications 1 à 14,
- générer un signal porteur (TS) avec une fréquence d'impulsion définie,
- soumettre au signal porteur (TS) une trajectoire (T) sur laquelle se meut une goutte (TR) éventuelle, laquelle est distribuée par la valve doseuse (DV), de telle sorte qu'un signal de mesure modulé (MS) soit généré par une interaction physique du signal porteur (TS) avec la goutte (TR),
- déterminer sur la base du signal de mesure (MS), sous considération de la fréquence d'impulsion définie si une goutte (TR) a été distribuée par la valve doseuse (DV),

une démodulation en quadrature du signal de mesure modulé (MS) étant réalisée, pour déterminer une composante en phase (I) et une composante en quadrature (Q) du signal de mesure démodulé (MS).

# FIG 1

**FIG 2**

# FIG 3

**FIG 4**

# FIG 5

**FIG 6**

60

55

56
57
58
59

S1

S2

RX

TX

DB

I/O

SI

$U_S$

PGM

# FIG 7

700

7.I

TS

7.II

MS

7.III

MOD

7.IV

**FIG 8**

800

8.I

Q     I

8.II

$\varphi$     A

8.III

$d\varphi/dt$     $dA/dt$

8.IV    $\max(d\varphi/dt), \max(dA/dt), I_T$

8.V    $A_M, \varphi_M$

# FIG 9

900

9.I    $A_M, \varphi_M$

9.II

9.III    $RW_A, RW_\varphi$

9.IV    AW

9.V    AW > AW_Oben? ∨ AW < AW-Unten?    j / n

9.VI

9.VII    $RW_A \in$ ARI ? $RW_\varphi \in$ PRI ?    j / n

9.VIII

9.IX

EP 3 359 305 B1

**FIG 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1520606 A
- US 5267978 A
- WO 9921031 A
- US 5275787 A
- WO 2013059835 A1
- DE 102006014858 A1
- US 6230000 B1